# EUROPEAN PATENT APPLICATION

(11) **EP 2 447 644 A2**
(43) Date of publication of application: **02.05.2012**
(21) Application number: 11186543.2
(22) Date of filing: 25.10.2011
(51) Int. Cl.: F25D 23/12

(54) **Beverage-making insert with built-in water bypass**

(30) Priority: 29.10.2010 US 915382
(71) Applicant: Whirlpool Corporation, Benton Harbor, MI 49022 (US)
(72) Inventor: Hortin, Gregory G, Benton Harbor, MI Michigan 49022 (US); Stagg, Michael E, Benton Harbor, MI Michigan 49022 (US); Strandemo, Garett L, Benton Harbor, MI Michigan 49022 (US)
(74) Representative: Nicholls, Michael John

(57) **Abstract**

An apparatus, method, and system of dispensing beverages. A dispensing module includes a body, a mixing chamber in the body, and a conduit in the body whereby the mixing chamber and conduit have separate inlets and outlets. The separate inlets can be translated selectively between a discharge end of a diluent source such that from the single module either diluent directly from the diluent source can be dispensed or diluent through the mixing chamber can be dispensed to a container. The mixing chamber can be pre-loaded with concentrate or flavoring for mixing with the diluent or concentrate or flavoring can be added to the mixing chamber from a separate source. Thus, the two flow paths are isolated from one another but allow at least two beverage choices through the same module.

## Description

The present invention relates to beverage dispension and, in particular, to creating and then dispensing beverages into a beverage container with a machine.

A number of attempts have been made to provide on-demand beverages. A conventional approach is a pre-packaged, prepared beverage (e.g. bottled or canned) obtained via a vending machine or simply purchased off-the-shelf at a store. The beverage is pre-packaged in a sealed container (e.g. bottle, can, or box) and can be opened and consumed, or stored for later use (including in a refrigerator).

Another approach is to allow the consumer to create the beverage and deposit it into a container (e.g. cup or glass). For example, a number of known machines dispense a beverage to a consumer according to user-selection. One such approach would be a coffee maker. A consumer can buy or select pre-packaged coffee grounds and/or flavoring, deposit that material in a drip or other appropriate coffee-maker, and produce a beverage into a cup.

Another widely available technology is a beverage station such as at fast food and convenience stores. The consumer selects the type of beverage, places the glass or cup under that selection, and the machine mixes the drink and dispenses it.

Other examples exist. An emerging attempt is pre-packaged pods or cartridges holding a given beverage concentrate, additive, or flavoring. The disposable device can be inserted into a machine. The machine can extract a pre-determined amount of concentrate or flavoring from the device, mix it with a diluent (e.g., water), and dispense it into a cup or glass. This can be either in a household or commercial context.

Each of the foregoing has pros and cons. For example, pre-packaged drinks, such as bottled cola, tea, coffee and juices, do not allow user customization. For a variety of choice, a large inventory must be kept on hand. Premix-type soda commercial drink machines require bulk quantities of pre-mix to be loaded and maintained. Such machines tend to be substantially large in size. Table top coffee-making machines require substantial manual activity (e.g. insert a filter, open coffee package into the filter, install it into the machine, and direct diluent through it).

The pod- or cartridge-type systems usually require some sort of pump or discrete component to meter contents from the pod or cartridge through a separate path to mix with a diluent from a separate path. Alternatively, the cartridge or pod is installed in the diluent path. In the former case, valving or separate diluent conduits are needed to shift the diluent path relative the concentrate or additive, or coordinate dispension of the concentrate or flavoring in one path with diluent in another path. In the latter case, if a cartridge or pod is placed in the diluent path, the user may not be able to obtain just the diluent (e.g. water), as it has to flow through the cartridge or pod. The cartridge or pod must be removed if only diluent is desired. Alternatively, there must be valving and actuators to switch between two diluent paths or there must be two diluent lines.

Because of a variety of factors, the foregoing types of available beverage dispensing systems may not meet all of a consumer's demands. For example, in many contexts, space is a consideration. A consumer might want increased beverage dispensing options rather than fewer; even in more constrained spaces. Examples would be with respect to table-top beverage machines or beverage dispensing built-in to another appliance such as a refrigerator.

Another issue would be economy. In certain situations, it is desirable to reduce complexity and factors that can increase cost. For example, it could be advantageous to reduce the number of valves, pumps, actuators, and/or water lines needed for different dispensing options but retain substantial flexibility in beverage creation options.

Another issue would be flexibility relative to use of removable components in a beverage dispensing machine. For example, many beverage concentrate or additive pods or cartridges are adapted to simply dispense concentrate or additive into a diluent stream and thus have a single dedicated function. They do not have multiple functions. Some cartridges or pods are pre-filled with concentrate or flavoring and allow introduction of a diluent through them to produce a beverage. This again, though, is a single function. The single function is to add concentrate, flavor, or another substance to the diluent and dispense the combination to a consumer's container. They do not allow multiple functions.

Therefore, it has been discovered that there is room for improvement in this area and/or there are previously unrecognized features that could be desirable for consumers.

It is therefore a primary object, feature, aspect, or advantage of the present invention to provide an apparatus, method, or system which improves over or solves problems and deficiencies in the art.

Other objects, features, aspects, or advantages of the present invention include an apparatus, method, or system as above described which:
a. Provides multiple beverage dispensing options from a machine without requiring valving to switch between multiple diluent flow paths.
b. Provides flexibility of beverage dispensing options while retaining or improving economy relative to those options, as well as relative to a beverage dispenser or other appliance itself.
c. Maintains beverage option flexibility without cross-contamination between multiple beverage choices.
d. Can be implemented in a variety of ways with regard to a variety of beverage concentrate or additives and mixing methods.
e. Can be implemented in a variety of different dispensing machines and contexts.
f. Can be implemented in an apparatus that is inserted into a machine.

In one aspect of the present invention, a method of multiple-option beverage dispension from a machine comprises placing a removable module in a first orientation relative to a liquid stream so that the liquid stream mixes with another substance to produce a beverage comprising a mixture, or placing the removable module in a second orientation relative to the liquid stream so that the liquid stream bypasses the mixing chamber to produce a beverage of just the liquid. Optionally, one or more additional orientations relative to the liquid stream can produce a different mixture for a beverage from the same module.

In another aspect of the present invention, an apparatus comprises a dispensing module for use with a fluid dispenser. The module has a body defining a mixing chamber and a conduit which bypasses the mixing chamber. An inlet to and an outlet from the mixing chamber of the module are separate from an inlet to and an outlet from the bypass conduit. This allows independent liquid flow paths through either the mixing chamber or the conduit. From a single module, this allows either (a) mixing of the fluid with a concentrate or additive and then dispension to a container, or (b) bypass of the mixing chamber by the liquid and dispension of the liquid directly into the container. The module provides the ability for an output of a liquid diluent mixed with a concentrate or additive or an output of simply the diluent while the module is installed in the beverage dispenser machine. A consumer could either select just the liquid (e.g., water or other diluent) as an output or a mixture of concentrate or additive and the liquid.

Another aspect of the invention comprises a dispensing machine having a source of diluent and a dispensing location. A module comprising a body, a mixing chamber in the body, and a conduit in the body, with separate sets of inlets and outlets to each of the mixing chamber and conduit, can be operatively installed in the machine. The user can select either just a diluent through the separate conduit or a mixed diluent/concentrate or additive through the mixing chamber.

In another aspect of the invention, a method of dispensing a beverage comprises providing a modular device with two separate fluid pathways between two separate sets of an inlet and outlet for a source of liquid, and selecting between directing the liquid into one fluid pathway, mixing a beverage additive or concentrate within a liquid along the one fluid pathway and dispensing the mixture into a beverage container, or directing the liquid into the other fluid pathway and dispensing the liquid into, e.g., a beverage container.

The invention will be further described by way of example with reference to the accompanying drawings, in which:

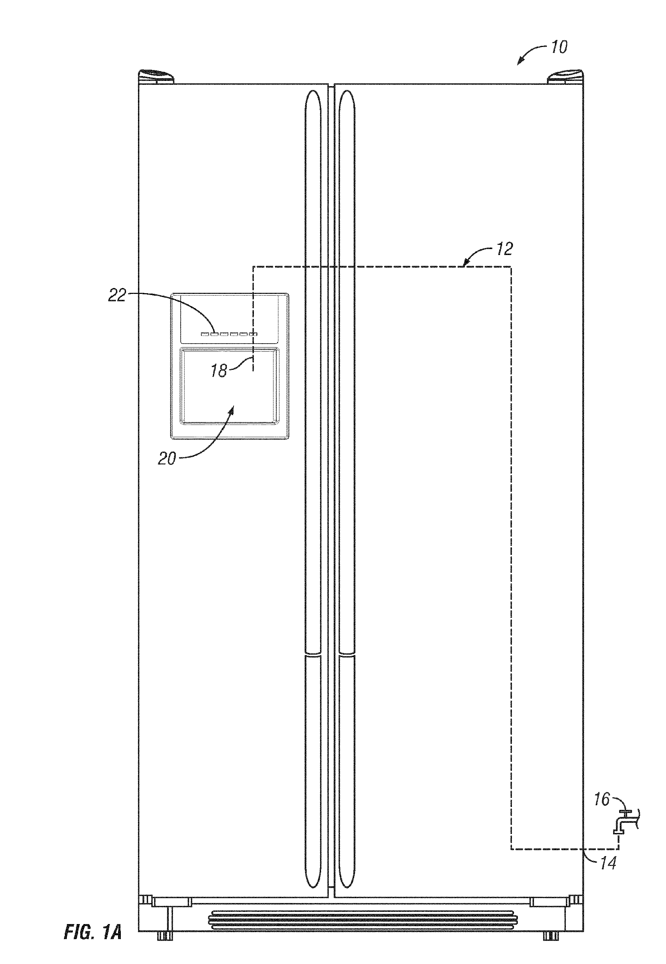

Figure 1A is a front elevation view of a refrigerator with a beverage dispensing system such as is known in the art.

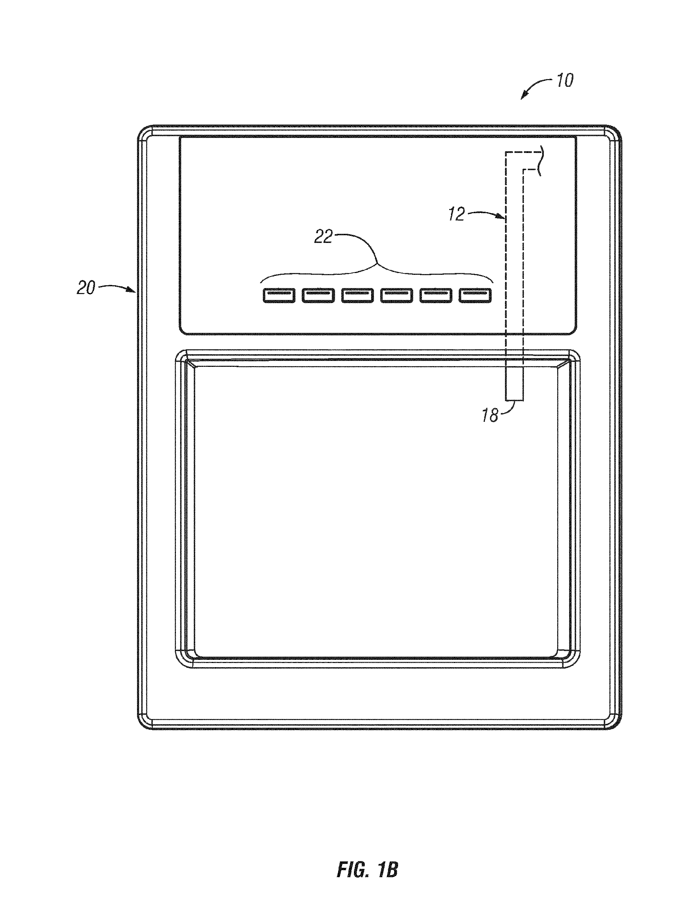

Figure 1B is an isolated enlarged front elevation view of the dispensing station of the refrigerator of Figure 1A and its water supply tube.

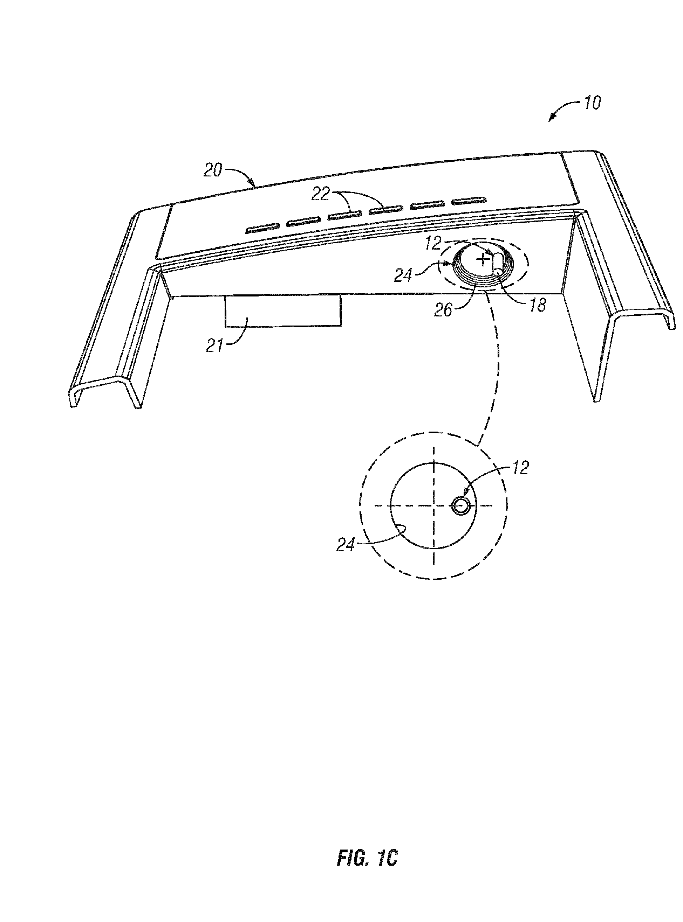

Figure 1C is an isolated perspective view of a module interface for receiving a module according to an exemplary embodiment of the present invention at the water dispensing tube of the dispensing station of Figures 1A and B.

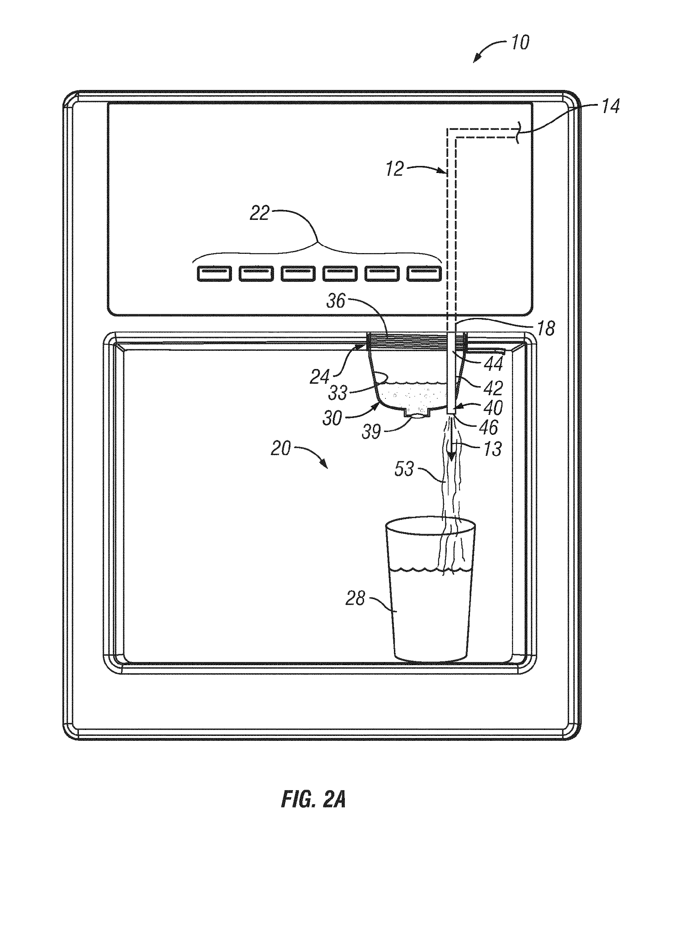

Figure 2A is similar to Figure 1B but shows a dispensing module according to an exemplary embodiment of the present invention installed into the interface of Figure 1C, and further illustrating a first state or orientation for the module, namely selectively dispensing just water from water tube 12 through a bypass conduit 40 in module 30 to a glass.

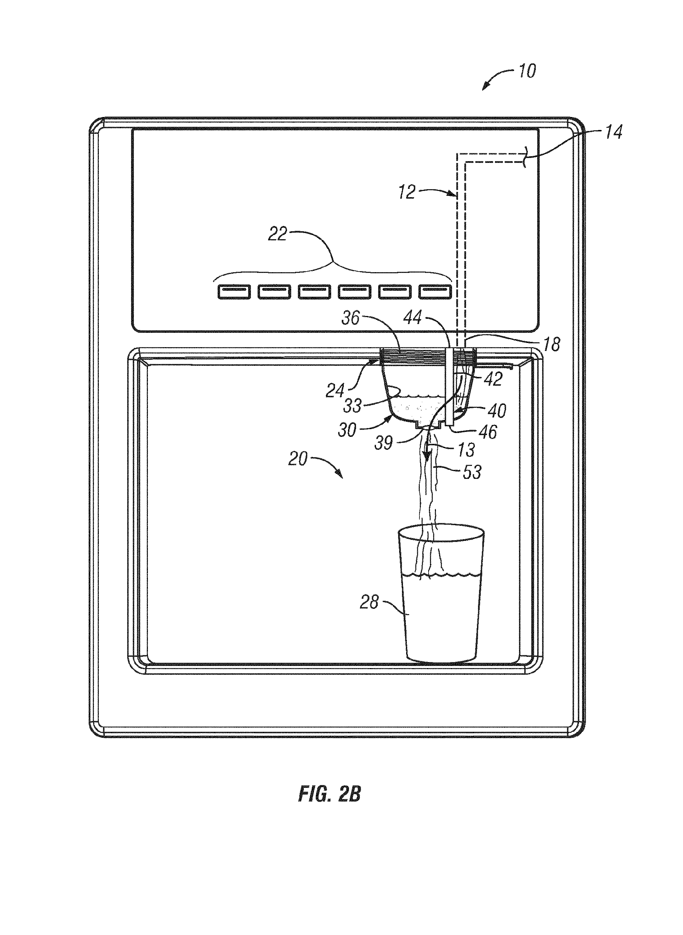

Figure 2B is similar to Figure 2A but shows the dispensing module 30 rotated to a second state or orientation so that bypass conduit 40 is moved out of alignment with water tube 12 and instead water tube 12 is aligned to deposit water into mixing chamber 33 of module 30 to dispense a beverage into a beverage container that is a mixture of water from the water source and a beverage concentrate or additive in or added to the module.

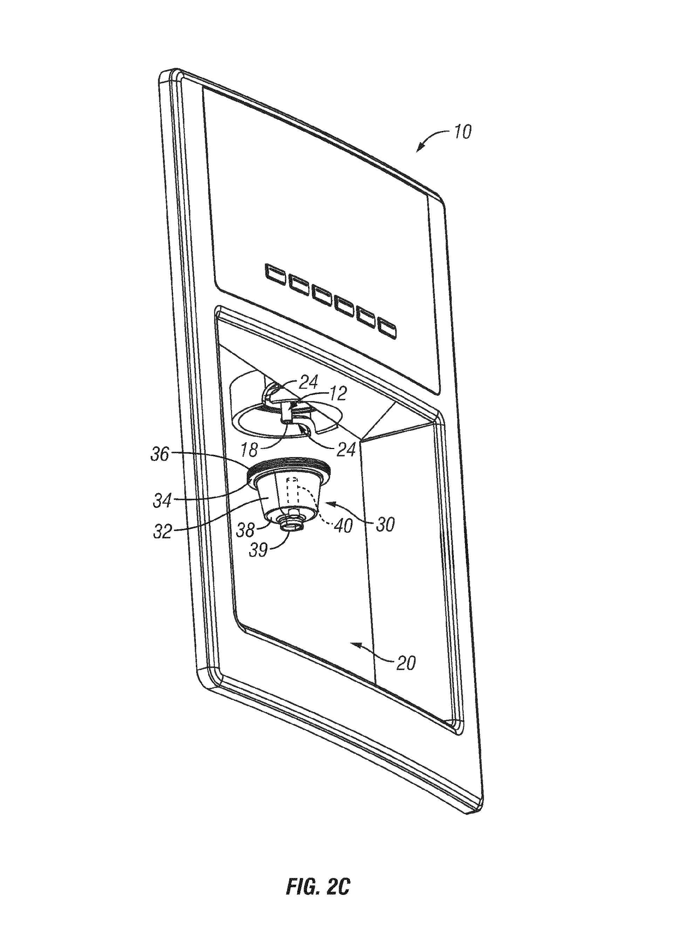

Figure 2C is a perspective view of the dispensing station of Figure 2A showing the module interface with the module separated from the interface.

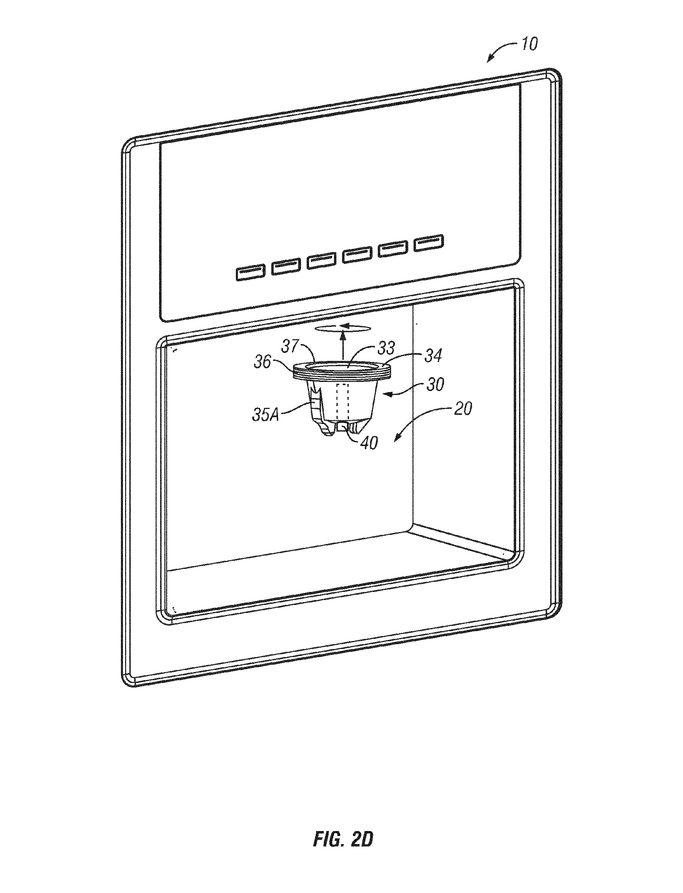

Figure 2D is similar to Figure 2C but shows the module and its bypass feature, including diagrammatically illustrating how the module can be rotated around its central axis to rotate the bypass feature relative to the water tube in the appliance.

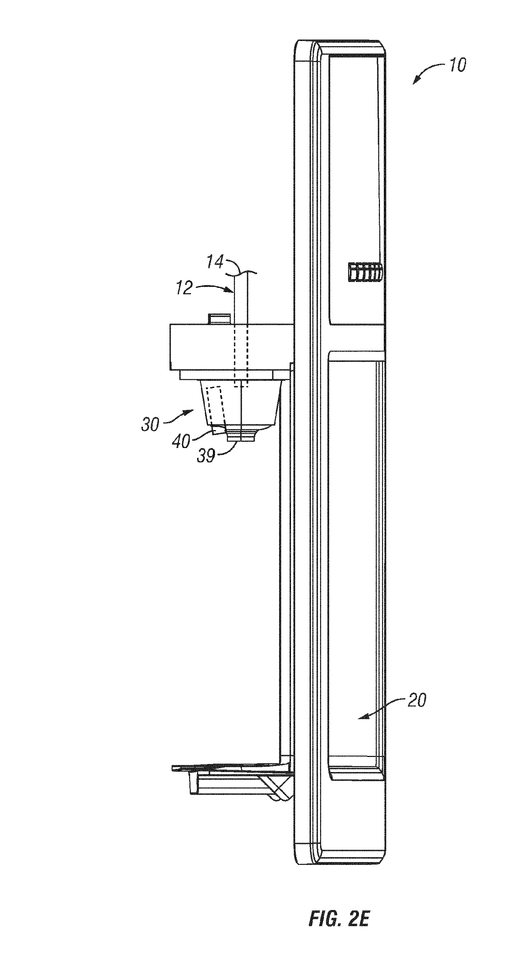

Figure 2E is a side elevation of Figure 2B.

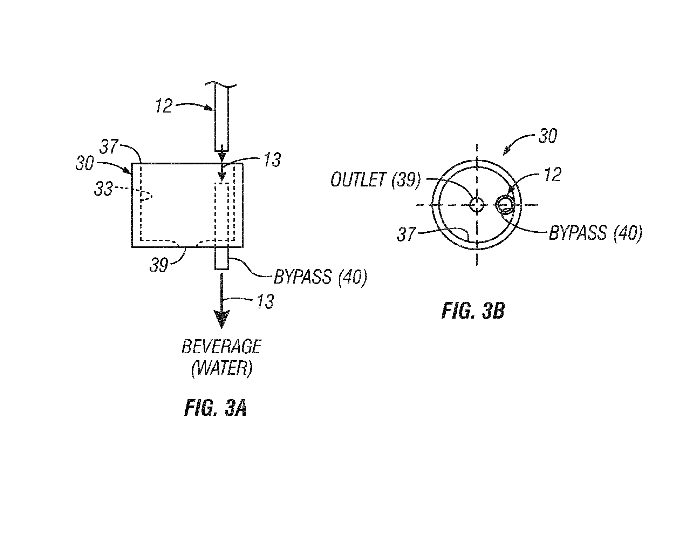

Figure 3A is a diagrammatic view of a first state of the module of Figures 2A-E showing direct dispension of water through the bypass by position of the module relative to the water tube in the appliance.

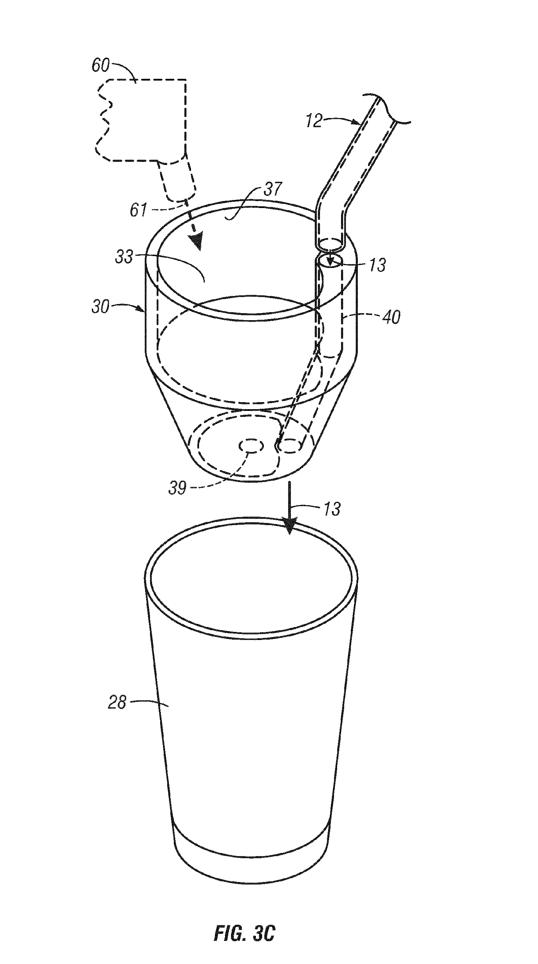

Figures 3B and C show top plan and perspective views respectively of the first state for the module as diagrammatically illustrated in Figure 3A.

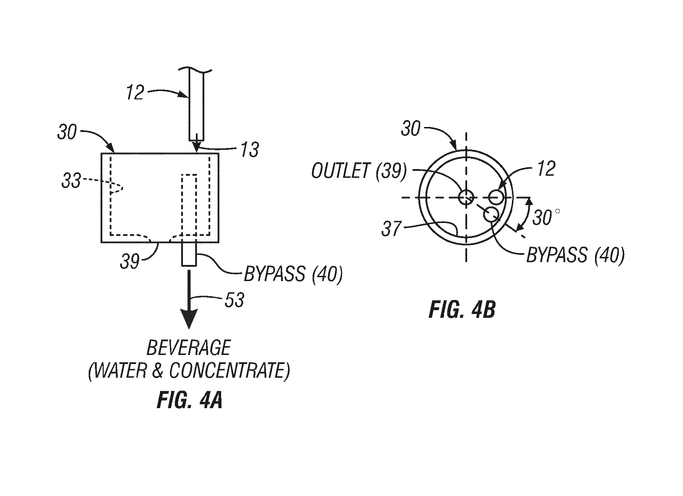

Figures 4A-4C are the same as Figures 3A-C except showing the module translated relative to the water tube to a second state whereby water from the water tube is aligned to enter the mixing chamber of the module to mix with a concentrate or additive and leave the mixing chamber through a separate outlet to a beverage container for a mixed beverage as opposed to simply water through the bypass conduit around the mixing chamber, as in Figures 3A-C.

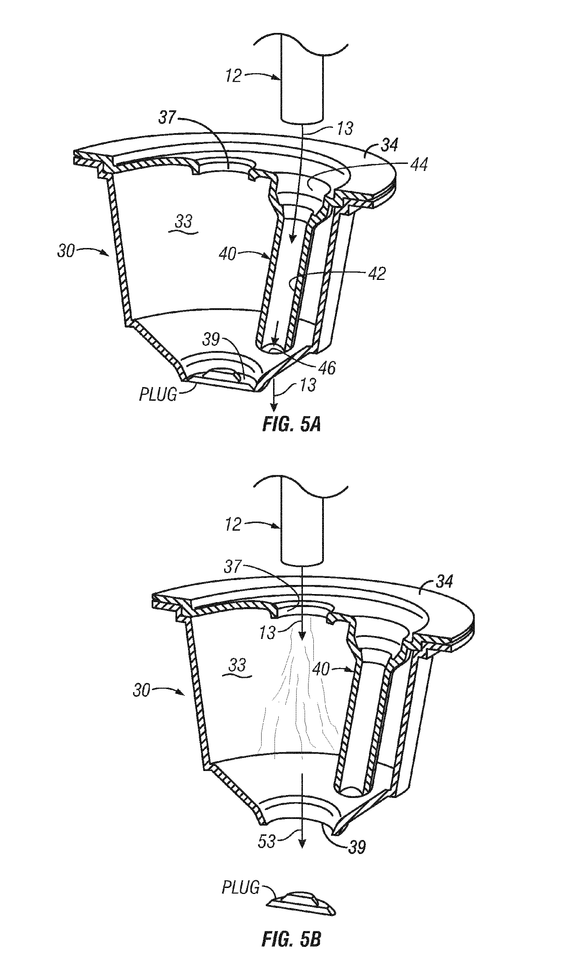

Figures 5A and B show perspective sectional views of an alternative module similar to that of Figures 2-4; Figure 5A translated to a first state where bypass conduit 40 is aligned with water tube 12 to dispense only water, and Figure 5B translated to a second state where the mixing chamber 33 is aligned with water tube 12 to mix water from tube 12 with a concentrate, additive, or other substance in mixing chamber 33 and dispense a mixed beverage. Tube 12 is in a fixed position in a machine, here a refrigerator.

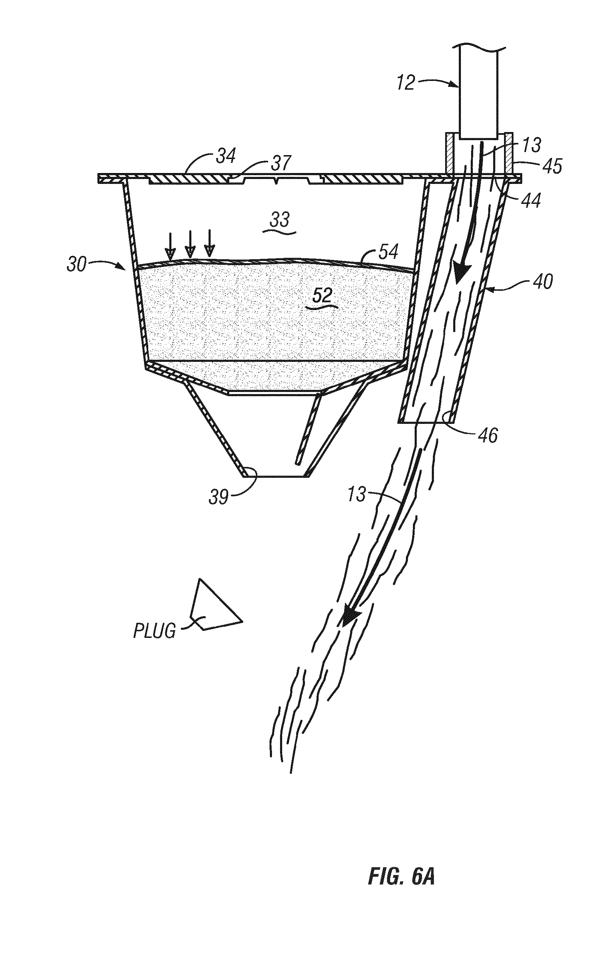

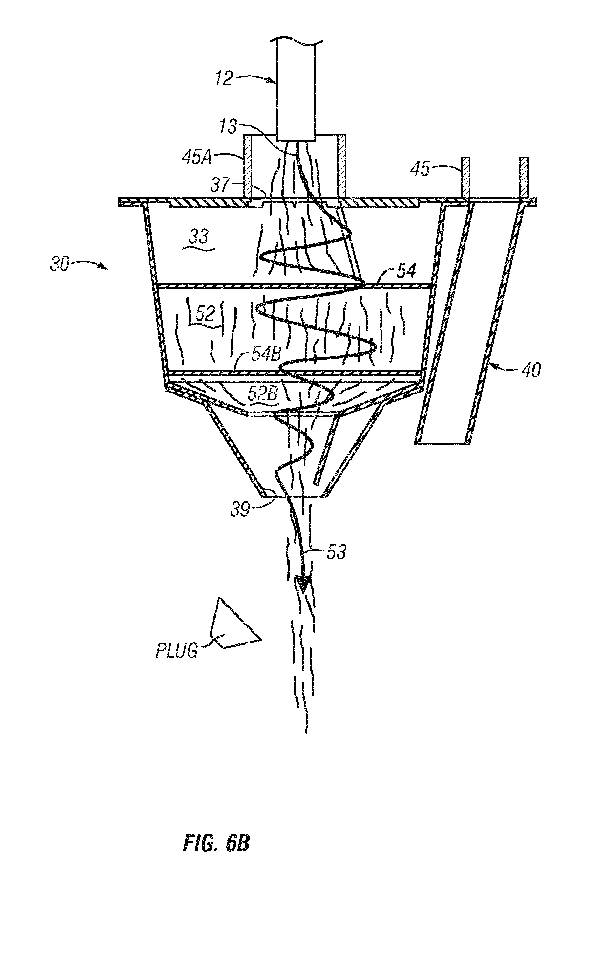

Figures 6A and B are similar to Figures 5A and B but show a still further possible embodiment of a module that can dispense water only in a first state of translation relative to water tube 12 (Figure 6A) and a mixed beverage in a second state of translation relative to water tube 12 (Figure 6B).

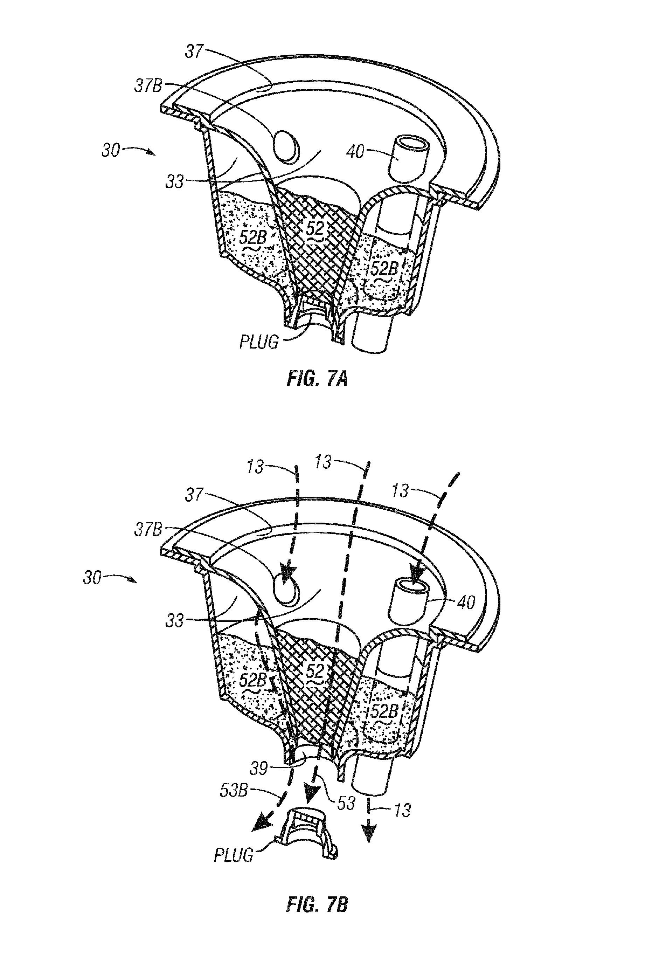

Figures 7A and B are similar to Figures 5A and B but with a third inlet that can be aligned with the water tube by translation of the module relative the water tube, the third inlet providing an additional concentration of diluent and concentrate or additive from the same mixing chamber outlet for a third beverage choice.

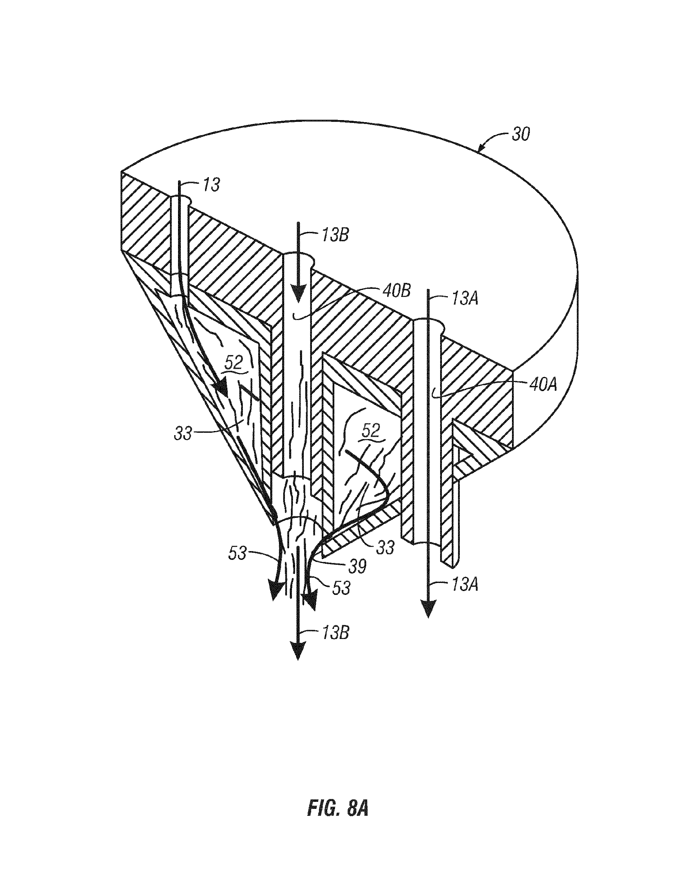

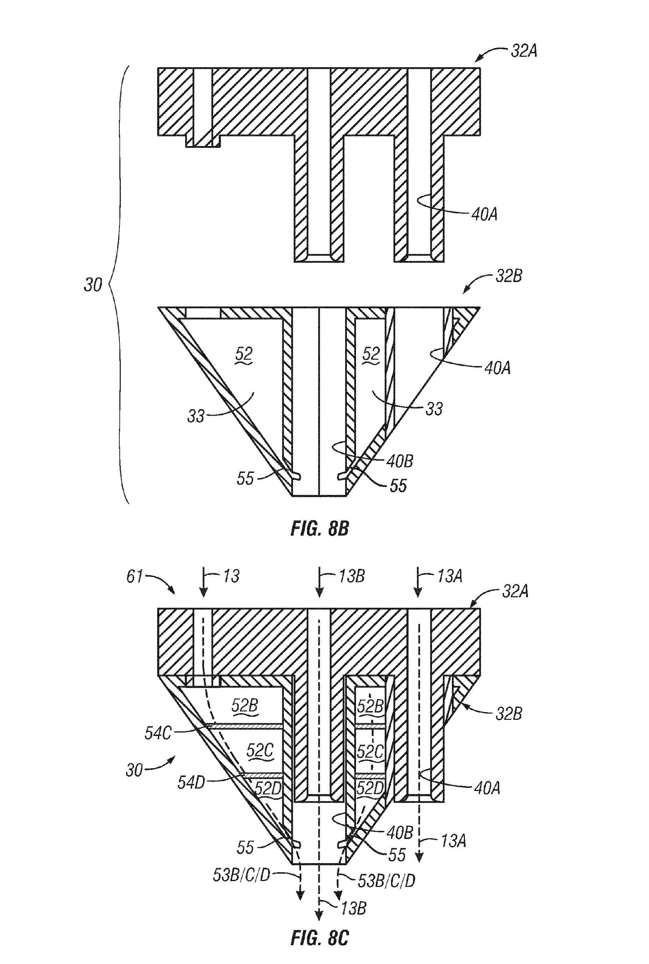

Figures 8A-C include a sectional perspective assembled view (Figure 8A), an elevation sectional exploded view (Figure 8B), and an elevation sectional assembled view (Figure 8C) of another alternative module to that of Figures 2-7; here a two-piece module being disassembleable for cleaning or refilling but having a first inlet to a first bypass conduit 40A with separate outlet, a second inlet to a second bypass conduit 40B having an outlet, and a third inlet to a mixing chamber 33 sharing an outlet with the second bypass conduit 40B.

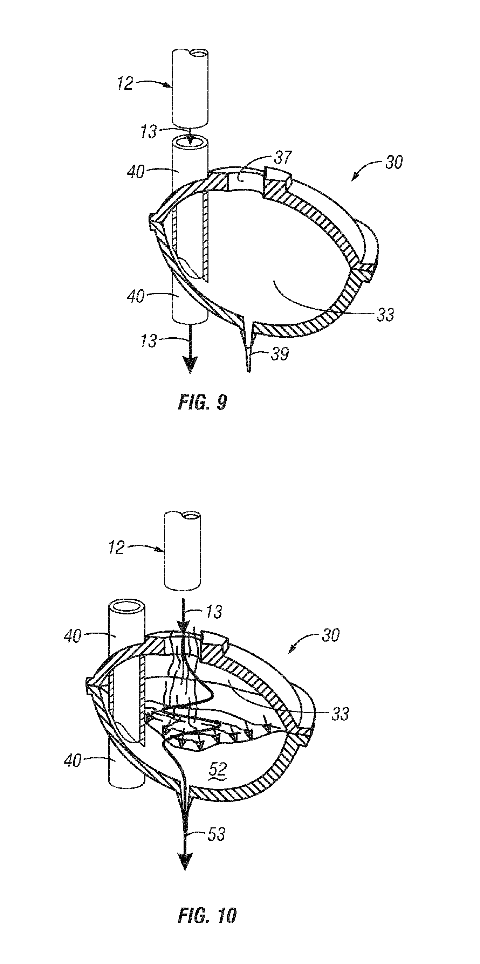

Figures 9 and 10 show sectional perspective views of a still further alternative embodiment of a module (more of a pod) according to the present invention; Figure 9 illustrating the pod translated to a first state relative to water tube 12 to bypass water around the mixing chamber, and Figure 10 illustrating how the substantially enclosed mixing chamber of the module can be pre-filled with a concentrate or additive which would mix with water to produce a mixed beverage from the mixing chamber outlet when the inlet to the mixing chamber is aligned with the water tube in a second state.

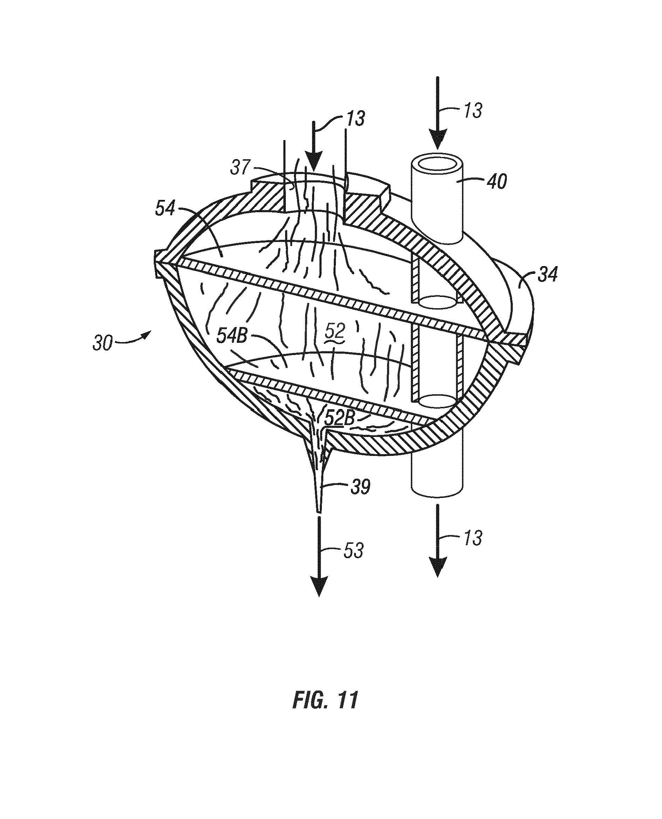

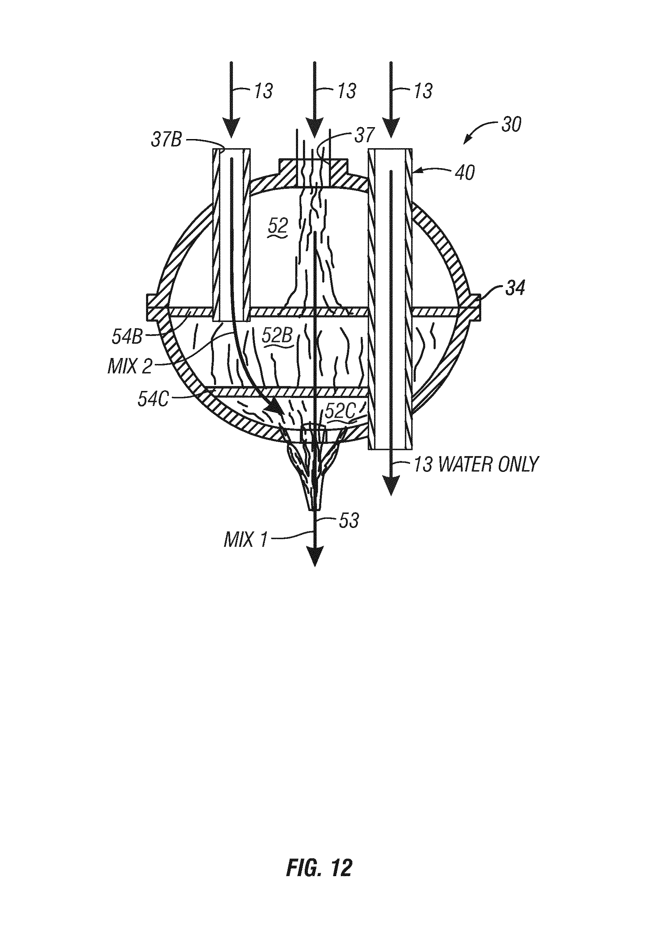

Figures 11 and 12 show in sectional perspective and elevation, respectively, an alternative embodiment of the pod module of Figures 9 and 10 where the pod has a water bypass but the mixing chamber of the pod comprises multiple sub-chambers for holding multiple quantities of the same or different concentrates, flavorings, or substances for mixing with water (Figure 11), or multiple sub-chambers with the same or different substances and multiple fluid pathways to provide plural substance and/or concentration choices for a mixed beverage (Figure 12).

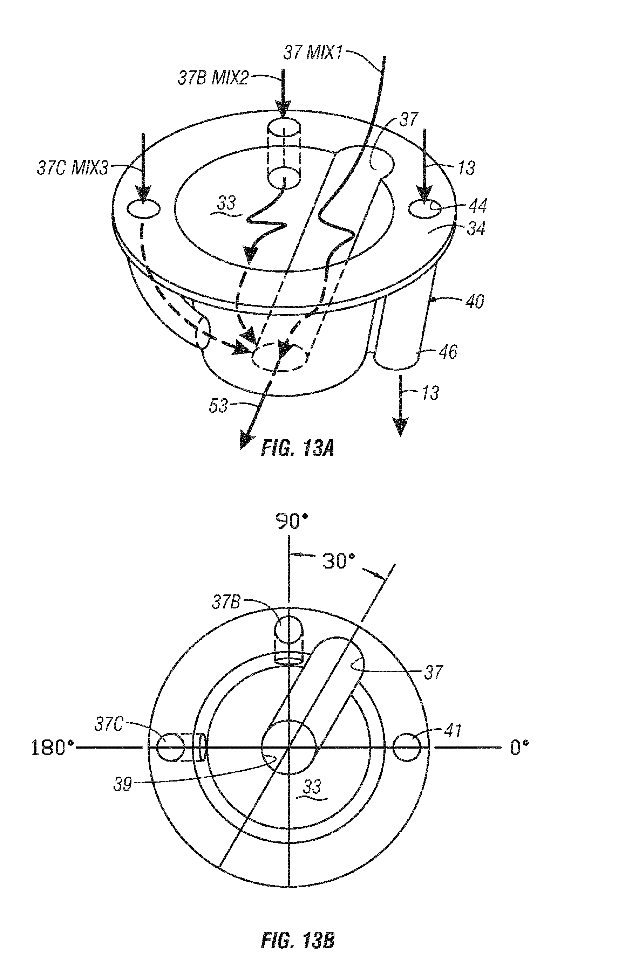

Figures 13A and B are similar to Figures 6A and B but show an alternative embodiment of a module (here more of a cartridge than pod) that can be positioned relative to a water tube for dispensing (a) water through a bypass tube, (b) water mixed with a largest portion of a substance filling the mixing chamber, (c) water mixed with a smaller portion of the substance in the mixing chamber, and (d) water mixed with a still smaller portion of the substance of the mixing chamber, by channeling the water into the mixing chamber at different elevations in the mixing chamber by rotational selection between four water inlet positions.

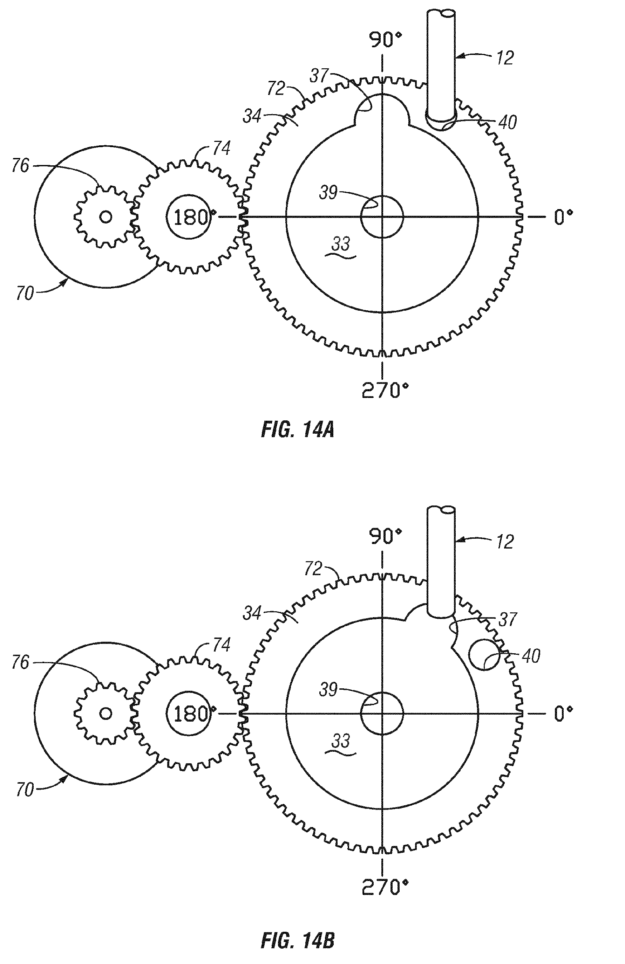

Figures 14A and B are top plan views of a module similar to Figures 5A and B but including a geared interface with an actuator which can rotate the module relative to the water tube between a first state where a bypass conduit is aligned with the water tube (Figure 14A) and a second state where the mixing chamber is aligned with the water tube (Figure 14B).

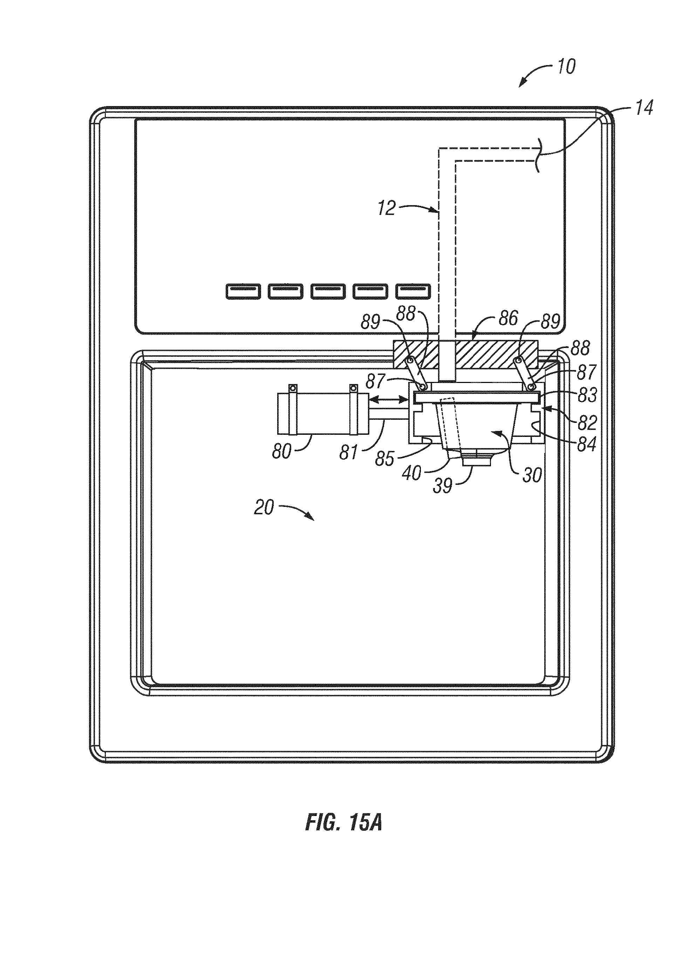

Figures 15A-C are simplified elevation views of an alternative way of translating a module between bypass and mixing states; here by linearly translating a carriage or housing holding a removable module like Figs. 5A and B, relative to the water tube with an actuator by installing the module in the carriage or housing and pushing or pulling the module underneath the fixed water tube.

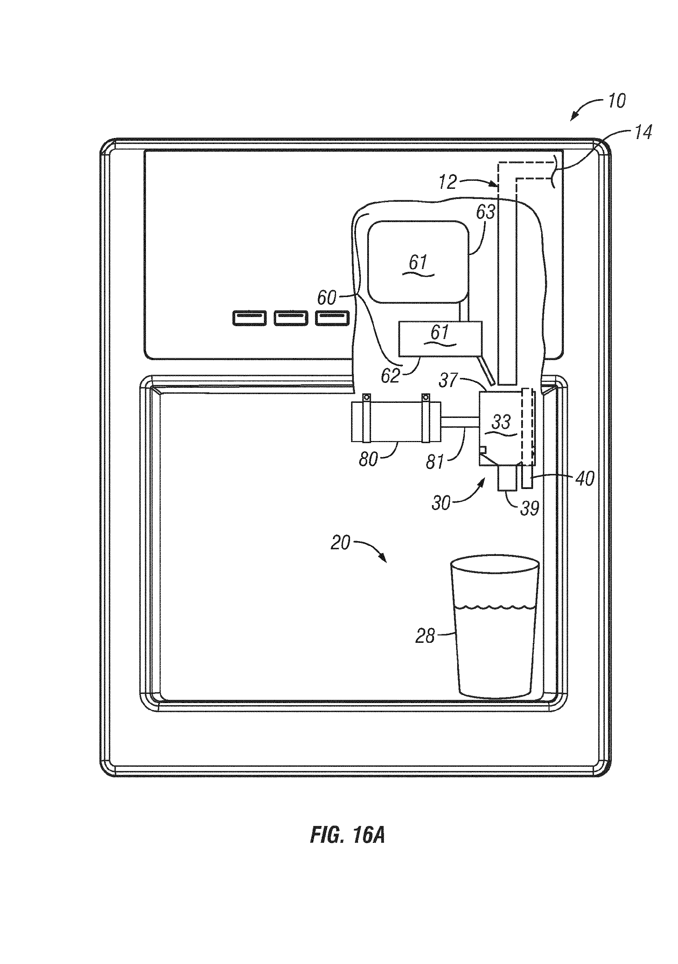

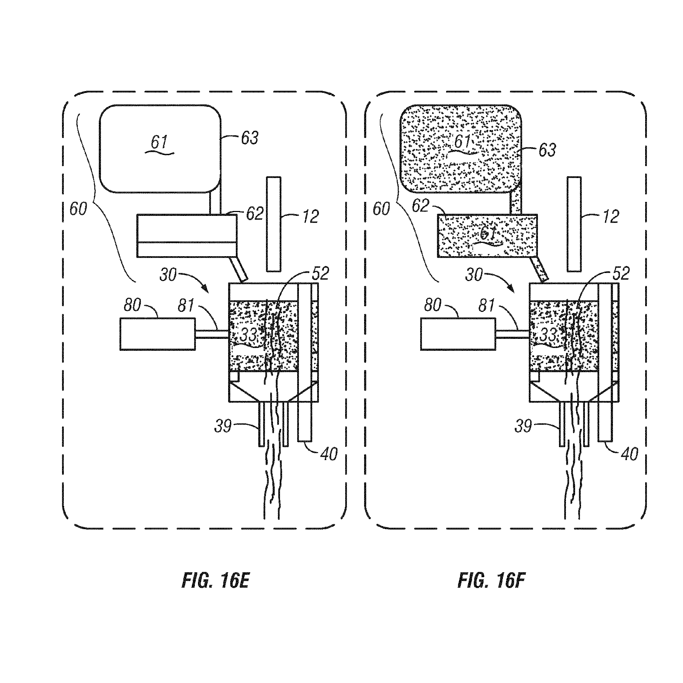

Figures 16A-F are views similar to the set-up of Figures 15A-C but illustrating diagrammatically a variety of options for multi-choice beverage dispensing with a removable module that can be translated relative to a fixed water tube in a machine.

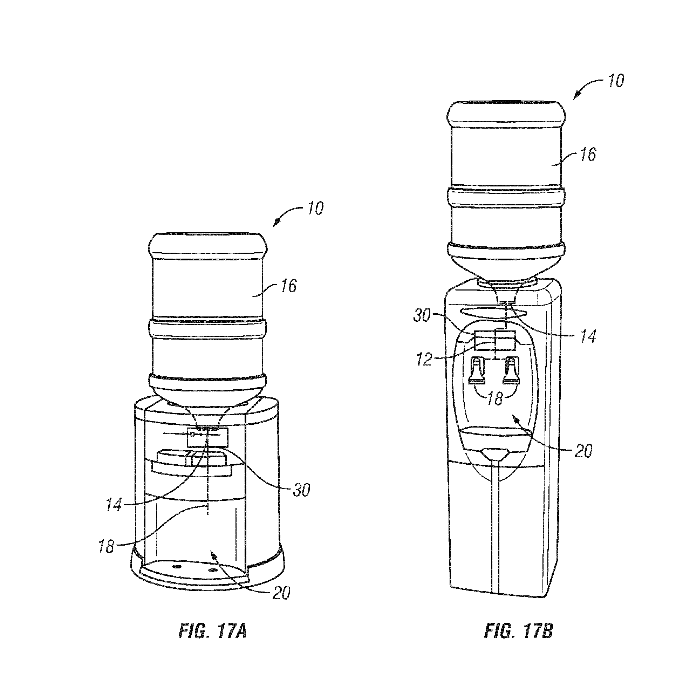

Figures 17A-D show, in greatly reduced scale perspective views, several alternative embodiments of appliances or beverage dispensing machines with which at least one of the removable modules of the preceding Figures could be implemented.

### DETAILED DESCRIPTION OF EXEMPLARY EMBODIMENTS OF THE INVENTION

### Overview

For a better understanding of the invention, several ways in which the invention can be embodied or implemented will now be described in detail. It is to be understood that these exemplary embodiments are by way of example and not limitation. They are neither exclusive nor inclusive of the forms the invention can take.

For example, the exemplary embodiments will focus upon beverage dispension wherein one choice uses a first substance such as water as a diluent to dilute another substance such as a concentrate or flavoring. As can be appreciated, the diluent could be other liquids. For purposes of this description, the first substance does not have to necessarily function strictly as a diluent of the second substance. For example, the first and second substances could be solute and solvent. As other non-limiting examples, the first and second substances could be related as simply parts of an admixture, combination, blend, or assortment. The term diluent will sometimes refer to simply a first substance, whether a diluent, solvent, or imply a liquid or substance.

The diluent or first substance is either dispensed directly or is mixed with some other or second substance. Examples of such other or second substance include, but are not limited to some type of beverage concentrate, additive, solute, or ingredient to produce some sort of flavored drink or other beverage including, but not limited to, having water as a diluent. Either the first or second substance could itself be a mixture, admixture, combination, blend, or combination; or solution or dilution. For purposes of this description, the other or second substance to which the first substance or diluent is added will be sometimes referred to generically as a concentrate or beverage concentrate, even though this other substance may alternatively sometimes more aptly be considered to be other than a concentrate (e.g. non-concentrated). Furthermore, the beverage concentrate could be any phase (solid, liquid, gas). For purposes of these examples the beverage concentrate is a flowable liquid or powder that mixes with or is diluted by water to produce some sort of beverage.

The concentrate could be loaded into a mixing chamber of the modules of the exemplary embodiments prior to insertion of the module into a machine or appliance to produce the beverage. Alternatively, the concentrate could be supplied by a separate metering or dispensing subsystem into the mixing chamber after the module is installed in the machine or appliance.

The terms machine or appliance are intended to refer to a wide-range of devices with which the module can be implemented. Some non-inclusive specific examples are described herein. The exemplary embodiments are described primarily with respect to a household-type refrigerator having an in-door dispensing station supplied with at least water. However, the module can be implemented in analogous ways in other devices, including smaller or larger scale size or intended for different consumers or contexts than household-type refrigerators.

The diluent, such as water, could be from a water supply line from conventional plumbing. Alternatively, it could be supplied from a reservoir or tank in the appliance or other source. The diluent is dispensed in a stream from a fixed-in-position tube or outlet at a dispensing station or location relative the machine. A controllable valve or component controls diluent dispensing from that tube or outlet.

Additionally, the exemplary embodiments will focus upon a dispensing module which is insertable into and removable from the beverage dispensing appliance but which can be changed or translated between different positions and/or orientations relative to a fixed outlet end of a water source tube. It is possible that the module could be built into the appliance and still be changed in orientation relative to the water tube. In either case, the module can be considered an insert into the machine or appliance.

### General Structure and Operation

As can be seen by the various embodiments in the Figures, the general structure and operation of the exemplary embodiments include the following:
(a) A module having a body with a chamber and a bypass conduit, the module adapted to be removably emplaced in a machine or appliance relative to a fixed water outlet. The body or parts thereof can be made of one or more materials that are impervious to water, food-grade, and washable.
(b) The chamber includes (i) a volume or space in which a substance can be pre-emplaced or added, (ii) an inlet adapted to receive water from the water source and introduce the water to at least a portion of the volume or space to mix, combine, or co-mingle with the substance, and (iii) an outlet from the volume or space. The chamber can be of any of a variety of sizes, depending, of course, at least in part on the size of the body. In these examples the body is on the order of a few inches in width, depth and height. The Figures indicate a range of possible chamber volumes proportional to that body size.
(c) The bypass conduit includes (a) a flow path isolated from the chamber, (b) an inlet separate from the chamber, and (c) an outlet separate from the chamber and its outlet. This combination provides a complete bypass of the chamber. The inlet to the bypass conduit, when translated or oriented to be underneath the fixed outlet of the water tube, is adapted to receive water from the outlet end of the water source in a manner which captures and controls water from the outlet end of the water tube and directs it to the bypass conduit outlet for dispension. When the module is translated or oriented so that the fixed outlet end of the water tube is above the chamber inlet, water from the outlet end of the water tube is captured and controlled in the chamber and dispenses from the outlet of the chamber. The chamber is generally isolated from the bypass conduit.

As can be appreciated by those skilled in the art, a variety of ways exist to allow translation of the body of the module relative to a fixed outlet of a water source tube. One is by rotation of the module relative the tube. Another is linear movement. Others are, of course, possible.

Furthermore, as can be appreciated by those skilled in the art, a number of ways exist to communicate water from the water tube into either the chamber or the bypass tube. One can be simply vertical alignment of one of (a) an inlet to the chamber or (b) an inlet to the bypass tube with the fixed outlet end of tube 12 to allow a stream of water from the water tube to move, with assistance of gravity, from the outlet of the water tube into the inlet of either the chamber or the bypass tube. Water tube outlet diameter and water stream diameter and speed can be coordinated with diameter of the inlets to the chamber and bypass tube to deter splashing and promote water from the water tube to enter either the chamber or bypass tube. Also, by appropriate design, the distance between the very distal part of the water tube outlet and the inlets to the chamber and bypass tube can be minimized for a similar purpose, while allowing translation of the module between alignment of the chamber inlet with water tube outlet and bypass inlet with the water tube outlet. Alternatively or in addition, a flexible or elastomeric component at the outlet end of the water tube or the inlets to the chamber and bypass tube, or both, could assist in substantially constraining the water stream to its intended path. Other structures or ways of promoting this are, of course, possible. One would be some type of curtain or curtains. Another would be some type of resilient or seal member or members that would constrain the water stream as it passes from the water tube outlet to either the chamber or the bypass.

In use, the user simply inserts the module into the refrigerator in a dedicated location or receiver in the refrigerator. The module is then available to selectively dispense water only or a concentrate diluted by water. For water, the user translates or orients the module to a first position or state where the bypass is aligned with the fixed outlet or discharge end of the water tube. For diluted concentrate, the user translates or orients the module so the mixing chamber is aligned with the outlet or discharge end of the water tube.

The above combination therefore provides the ability to have multiple beverage options from one module, where one option is simply water from the water source (by bypassing the chamber), and the other is water and any substance added to or in the chamber. The multiple choices are available even though the outlet end of the water source is generally fixed in position and the module is not removed from the appliance. All that is needed is that the module be adjusted in position or orientation to the outlet end of the water tube.

The adjustment or orientation can be made in any of a number of ways. One example is rotating the module. Another is sliding or generally linearly moving the module. It is possible there could be both some rotation and some linear movement. Other translations, adjustments, and/or orientation changes are possible. The general action is to adjust between (a) the inlet to the bypass being positioned to receive water from the outlet end of the water tube and (b) the inlet to the chamber being positioned to receive water from the outlet end of the water tube. Such adjustment could be manual. It could alternatively be actuated automatically or semi-automatically by some component or method. Examples include but are not limited to a mechanical or electro-mechanical sub-system or component. One example would be a gearing arrangement or lever that could be operated manually by a user to impart movement or translation of the module. A knob or control could be turned or slid to cause gearing or linkage to rotate or slide the module between states. Another example would be an electrical motor and a mechanical linkage or gearing arrangement with the module. The actuator sub-system could be calibrated to adjust position of the module between the inlets to the bypass or the chamber. This could be done in a number of ways, such as are within the skill of those skilled in the art. This combination could be integrated into any of a number of machines or appliances. One example is a table-top coffee/beverage maker. Another example is a refrigerator. Others are, of course, possible.

### Specific Exemplary Embodiment One (Figures 1A-C, 2A-E, 3A-C, 4A-C)

A beverage module 30 according to this embodiment is illustrated at Figures 1C-4C. It is removably insertable into a receiver 24 built-in at beverage dispensing station 20 of a conventional refrigerator appliance 10.

One example of such an appliance is shown at Figure 1A. Refrigerator 10 includes a water line 12 having a discharge or outlet end 18 fixed at dispensing station 20. It is operatively connected at connection 14 to a source of pressurized water (e.g., residential or municipal water 16). There would be some type of valve (not shown) in water line 12 that could block or allow pressurized water from discharge end 18. Such valving, and user actuated operation (e.g. by pushing an appropriate button or lever 22 at dispensing station 20), are well-known with respect to water and ice dispensing stations in a variety of refrigerators.

Dispensing station 20 (Figure 1 B) includes a cavity into which a container such as a glass can be inserted generally below water tube 12. As shown in Figure 1C, for exemplary embodiment one, the distal or outlet end 18 of water tube 12 extends towards or into the cavity defined by the module interface 24 (Figure 1C). Dispensing station 20 can include user-selected controls (e.g. buttons 22) such as can be used to select between dispension of water through water tube 12 or, as one example if available, ice from an ice chute (not shown) associated with an ice dispenser such as is conventional in many refrigerators. Paddles (not shown) are a common alternative to push buttons. As is conventional with many refrigerators, when a user pushes or selects a selection button or paddle, that action is electrically or electronically are processed into a signal which actuates appropriate components to deliver the user selection. For example, doors and/or conveyors and/or other components can be actuated via automatically controlled components (e.g. motors, solenoids, etc.) to dispense ice at dispensing station 20. Another example is a valve or pump which can be actuated to automatically allow or disallow water from the outlet end 18 of the water tube 12.

As indicated in Figure 1C, distal end 18 of water tube 12 is offset from the central axis of receiver 24. The purpose of this will become apparent with the following description.

As illustrated in Figures 2A-E, 3A-C, and 4A-C, module 30 comprises a body 32 having an upper end 34 and lower end 38. Upper end 34 can include a flange 36 that surrounds an upper opening or inlet 37 into a mixing chamber 33 inside a body 32 (Figure 2D). In this example, inlet 37 to mixing chamber 32 is the entire open top 34 of body 32. An outlet 39 (Figure 2C) is formed in the bottom 38 of body 32 from mixing chamber 33. In this example outlet 39 is much smaller in diameter than chamber 33. It can be sized to discharge the mixture or admixture from chamber 33 at a desired rate based on opening diameter and the nature of the mixture or admixture. Figures 2A and B show threaded flange 36 at or about the diameter of body 32. Figures 2C and D show threaded flange 36 of larger diameter as an option.

Note that a separate conduit, referred to herein as bypass conduit 40, is formed in or mounted on, or integrated with, or is attachable to body 32. Bypass conduit 40 includes an inlet 44 (Figure 2A), here generally in the plane of top 34 of body 20, and an outlet 46 (Figure 2A), towards the plane of bottom end 38 of body 32, and a main fluid path 42 between inlet and outlet 44 and 46. As can be seen from the drawings, including reference to an alternative embodiment of Figures 5A and 6A, bypass conduit 40 is essentially a separate flow path between the top and bottom of module body 32 that bypasses mixing chamber 33.

In the embodiment of Figures 1C and 2A-E, top flange 34 of body 32 is threaded (ref. no. 36) (Figure 2D) or otherwise configured to thread into internal threads 26 on module interface 24 (see Figure 1C). An alternative would be some sort of snap-fit such that the user manually brings body 32 up to the receiver or interface 24, and mates it in place such that it is held in interface 24 on its own. The offset of bypass conduit 40 from mixing chamber 33, is coordinated with the offset of water tube 12 from the center of circular receiver 24 (see Figure 1C) such that by manual rotation of module 30 around its central axis, either (a) vertical alignment or bypass tube 40 at its inlet end 44 can be made with the distal discharge end 18 of water tube 12 or (b) vertical alignment of that distal end 18 of water tube 12 with the interior of mixing chamber 33 can be effected. This is illustrated in the diagrammatic views of Figures 3A-C versus Figures 4A-C. Figures 3A-C show that threaded rotation of module 30 to align water tube 12 with bypass conduit 30 would allow direct dispension of water 13 from water tube 12 into a container 28 placed under module 30 at dispensing station 20 of refrigerator 10. This first state would thus allow the user to select and receive water as a beverage, even though module 30 is in place. No separate valve or the like has to be actuated (other than some type of valve or control to discharge water from distal end 18 of water tube 12). Water 13 would bypass mixing chamber 33 through separate bypass tube 40 when water tube 12 is over bypass tube 40.

On the other hand, a second state would involve user manual rotation of module 30 to take water tube 12 out of alignment with bypass conduit 40 and instead over the opening into mixing chamber 33 (see Figures 4A-C). This would allow the user to select a beverage whereby water 13 from water tube 12 would be discharged into mixing chamber 33 and then out of separate outlet 39 and into a beverage container such as glass 28. By any number of means and methods, a substance (e.g., concentrate) can be in or added to the mixing chamber 33 and mixed with water 13 from water tube 12 to produce this other beverage 53. For example, a beverage concentrate can be pre-loaded into chamber 33 before insertion into refrigerator 10, or a beverage concentrate can be metered or dispensed into an empty chamber 33 after module 30 is inserted by some metering or dispensing sub-system in refrigerator 10.

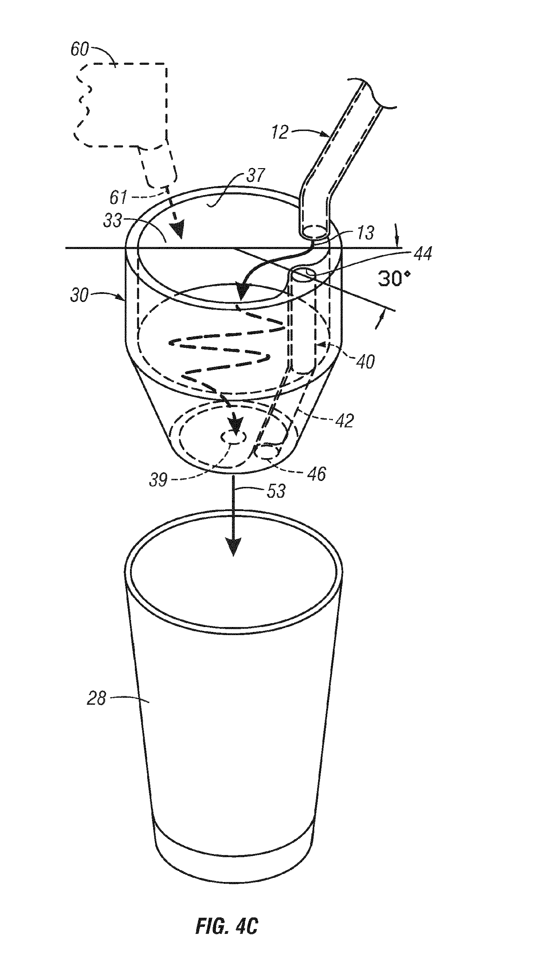

As diagrammatically illustrated at Figures 3C and 4C, optionally some sort of additive or concentrate subsystem 60 could be positioned relative to module 30 such that if module 30 is in the second state, the user could select the dispension of a beverage and water or diluent through tube 12 will enter mixing chamber 33 as well as a dose or amount of additive or concentrate 61 from subsystem 60. An example would be a powder subsystem that has some sort of meter or pump that would inject or drop the powder into mixing chamber 30.

The separate inlets and outlets for mixing chamber 33 versus bypass conduit 40 provides at least the flexibility of the possibility of at least two different beverages from the same module 30 when installed in appliance 10. All that would be required to select between the at least two different beverages is manual, easy, and even slight rotation of module 30.

In use, the user simply manually changes the position or orientation of the inlets to mixing chamber 33 and bypass tube 40 relative to discharge end 18 of water tube 12. In this embodiment it is by simple rotation of body 32 of module 30 between the positions in Figure 2A (first or bypass state for water as a beverage) or Figure 2B (second or mixing state for admixture of concentrate and water). As can be appreciated, if module 30 is originally installed in the first state (water-only), water can repeatedly and indefinitely be selected as a beverage as the refrigerator has access to essentially an unlimited supply of water (e.g., from a municipal water source). Module 30 can be left in that position indefinitely. But module 30 presents an alternative beverage choice by simply rotating body 32 to the second state. This can be accomplished without removing module 30. If module contains a pre-loaded concentrate, if might be a one-time use dosage. Once used one time, module 30 could be left in place but rotated back to the first state for water as a beverage choice. If another beverage choice is desired, the existing module 30 could be removed and a new module 30 could be substituted. The new module could have the same concentrate as the old module, or it could have a different concentrate or different concentration level compared to the old module. The user could have an inventory of modules 30 with different concentrates or different concentrations of the same concentrates for a variety of choices.

It is possible for pre-loaded concentrate in a module 30 to be able to dispense multiple doses of concentrate/water admixture. In that case, module 30 would provide at least two beverage choices to the user and for multiple servings. Further, it is possible for module 30 to have more than two beverage choices. For example, there could be a bypass for water only (as one choice), and two or more inlets to the mixing chamber or two or more flow paths through the mixing chamber where:
a. water into one mixing chamber inlet or along one mixing chamber flow path dilutes a first concentrate to a first concentration and the other inlets or paths dilute the first concentrate to different concentrations, or
b. water into one inlet or along one flow path dilutes a first concentrate and the other inlets or flow paths dilute other concentrates.

The concentrate(s) can be pre-packaged into the module. As a still further option and additional, a separate sub-system could dispense concentrate into a specific portion of the mixing chamber of module 30. Such a dispenser could store the concentrate in bulk (multiple servings) and include a metering device (pump or powder/granular meter) to inject or place a pre-determined dose of concentrate 61 into mixing chamber 33 (see illustration of optional metering sub-system 60 in Figures 3C and 4C). This can add even more beverage options to the system. For example, mixing chamber 33 of module 30 could be pre-loaded with coffee grounds. A dispensing sub-system could meter in a user's favorite coffee additive (e.g., cream, creamer, sugar, or flavoring) to mixing chamber 33. The user would then have, as beverage choices, water, coffee, or coffee with additive or flavoring. Alternatively, mixing chamber 33 could be empty when installed in refrigerator 10 and a sub-system could be operated to meter a quantity of concentrate from a bulk storage reservoir in the refrigerator into mixing chamber 33 when the user selects an admixture beverage instead of water.

Of course, the arrangement is additionally flexible in that the user could go back and forth between the two selections or two states. Module 30 could be inserted into receiver 24 and moved to the bypass/water state and allow repeated dispensing of water as a beverage. If the different beverage is desired, quick and easy rotation of module 30 in receiver 24 would provide the same (at least until any beverage concentrate or additive that is available is no longer available or exhausted). At any time, the user could rotate module 30 back to the bypass position and again receive water as a beverage. At any time, the user could remove module 30 and substitute a different module 30 which also has multiple beverage choices.

Module 30 could be made of any of a variety of materials. It could range from robust, long-lasting metals, plastics, or composites for long and repeated re-use (e.g. for at least the projected life span of an appliance such as refrigerator 10) to less expensive but sufficiently robust materials for its needed functions but be considered disposable. Its removability would allow it to be installed at will, and removed at will (e.g. for change in beverage concentrate (if pre-loaded) or to be cleaned or washed). If not disposable, mixing of concentrate or additive with diluent in mixing chamber 30 may require washing at least periodically.

There could be external structure or indicia on module 30 to inform the consumer which state the module 30 is in when installed. For example, as indicated in Figure 2D, a molded raised ridge 35A vertically on the side of body 32 could indicate when module 30 is rotated to the water only position versus the concentrate/additive position. There could be two such raised ridges; one of the first or bypass state, one for the second or admixture state. There could be indicia such as the words "mix beverage" and "water" on or associated with each. There could be other means of giving the user that information. For example, the threading and geometry of the parts could have mechanical stops or click stops that would help the user align between the two states. Furthermore, with some appliances there could be some sort of sensor (optical, proximity, capacitive, or others) that would sense rotational position of module 30 and be calibrated relative to first and second states and inform the user (e.g., through a display, an LED, or otherwise), when module 30 is in either state or neither state.

It will, therefore, be seen that this exemplary embodiment meets at least one or more of the stated objects, features, aspects, and advantages of the invention. It provides one module that allows at least two different beverage options using the same water tube discharge end for the diluent. It does not require a valve or pump or other mechanisms to divert the water between states or paths. It isolates the bypass from the mixing chamber.

As can be appreciated by those skilled in the art, rotation of module 30 between the two states can be engineered so that there is at least substantial isolation of flow paths in either state. For example, the inlet end of bypass conduit 40 could be conical or enlarged relative to the discharge end 18 of water tube 2 and sufficiently spaced apart from the opening to mixing chamber 30 that rotation of inlet end 44 of bypass conduit 40 underneath water tube 12 would sufficiently isolate pressurized water from tube 12 into conduit 40 and not into mixing chamber 33 (see, as one example, Figures 5A and B). Similarly, rotation to the second state could be configured so that water from tube 12 is substantially directed and isolated into mixing chamber 33 but not bypass conduit 40. There could be sealing or semi-sealing structures at least associated with inlet end 44 for increased control of water from tube 12 into either bypass conduit 40 or mixing chamber 33 with no significant sharing. In other words, there could be some sort of elastomeric grommet or O-ring around one of inlet end 44 of conduit 40 and/or distal end 18 of water tube 12 such that when they are directly aligned there is essentially a frictional fit or a substantial seal between the two. When in the second state, water from tube 12 could enter the much wider opening to mixing chamber 33, mix with the pre-filled concentrate or additive, and then leave the separate outlet 39.

It can be appreciated that the shape of module 30 and its receiver 24 can vary according to need or desire or according to any number of design factors. Figures 1C and 2A-E illustrate one possible general size for module 30 relative to a typical ice/water dispensing station 20 of a refrigerator 10. Module 30 could be scaled up or down depending on a variety of circumstances.

### Specific Exemplary Embodiment Two (Figures 5A-B)

Figures 5A-B show a variation on module 30 of the First Embodiment. Figures 5A-B show a mixing chamber 33 with a substantially closed top 34 (with relatively small inlet 37) and a bypass conduit 40 either built in or integrated with or attached to one side. The mixing chamber 33 can be pre-filled or manually filled by the consumer with beverage concentrate or additive.

The section views of Figures 5A-B show how bypass 40 is essentially integrated into module 30 but provides an independent flow path for water from tube 12 to bypass mixing chamber 33. Top flange 34 is not threaded but essentially a plate. It could be inserted into a complementary receiver in refrigerator and suspended from plate 34 but allowed to rotate between the two states (as described regarding Embodiment One).

Module 30 could be molded out of relatively inexpensive plastic. It could even be disposable. Modules 30 could be pre-filled with a beverage concentrate or additive 52 (see, e.g., Figure 6A). Some sort of foil seal or other seal could be placed over top 34 and outlet 38. Alternatively, a frangible or removable member could be broken off of either top or bottom when the user installs it. There could be some sort of a permeable member across the bottom of mixing chamber 33 to support the pre-filled concentrate or additive but allow mixed diluent and additive to pass through. In this way, relative inexpensive molding or assembly techniques and materials could form disposable plastic interchangeable modules 30. The user could purchase an inventory of the same concentrate or additive or different concentrates and additives for a variety of beverage selections. In all cases, the bypass conduit built into module 30 allows that module to be installed and left in place but still allow at least water as a beverage direct through bypass 40 or another beverage mixed in mixing chamber 33 by simple rotation of module 30.

In this embodiment of Figures 5A and B, a frangible or knock-out plastic piece or plug can be installed into outlet 39 of module 30 when manufactured and assembled, and then removed by the use before module 30 is installed in refrigerator 10.

This embodiment also differs from Embodiment One in that the top of module 30 is substantially closed by a solid wall or plate except for an aperture 37. Aperture could be sealed or plugged with a plug (not shown) similar to bottom opening 39. Having smaller inlet 37 would decrease likelihood that water would splash or spill into mixing chamber 33 when module is in bypass state (water only). It would also better retain any concentrate inside.

Figures 5A-B illustrate how bypass 40 could be built into the annular side wall of module body 32 and not be externally visible. But in an alternative, as shown in some of the other Figures, conduit 40 could be explicitly visible externally of module 30. In this manner, it could not only provide a visual indication of position of bypass conduit 40 relative to water tube 12 to help the user rotate module 30 to desired position, but also aesthetically and by visual recognition provide the consumer immediate perception and recognition that it is a two state module with the bypass feature.

As indicated in Figure 5A, in the first or bypass state, module 30 is rotated so that water tube 12 is aligned above bypass 40. When a user pushes an appropriate button for water on dispenser interface 22 (see Figure 2A), a refrigerator electrical or electronic controller 21 (shown diagrammatically in Figure 1C) would operate an appropriate component (e.g. valve) to dispense water (see arrow 13 in Figure 5A) from tube 12. Water 13 would flow from tube 12, through bypass 40 and out (see lower arrow associated with reference number 13) for water as a beverage (or for other use).

As indicated in Figure 5B, by rotation of module 30 until inlet 37 to mixing chamber 33 is aligned with water tube 12, the second or admixture state of module 30 is easily and quickly achieved. When a user pushes an appropriate button for water (or possibly another button which would also actuate water dispension from tube 12 but be labeled "Mixed Beverage" or the like) on dispenser interface 22 (see Figure 2B), refrigerator electrical or electronic controller 21 (shown diagrammatically in Figure 2B) would operate an appropriate component (e.g. valve) to dispense water (see arrow 13 in Figure 5B) from tube 12 into inlet 37 and, thus, into mixing chamber 33. Water 13 would flow from tube 12, through mixing chamber 33 and out of outlet 39 as an admixture 53 (see arrow) for a mixed water/concentrate beverage (or for other use). If concentrate is pre-loaded in chamber 33, water 13 would enter and dilute the concentrate to produce the admixture 53 dispensed from module 30. If concentrate is metered into chamber 33, water 13 would normally be timed to enter chamber 33 at the same time or after, so that water 13 dilutes the concentrate.

### Specific Exemplary Embodiment Three (Figures 6A-B)

Figures 6A-C show another similar module 30 to that of Embodiments One and Two. Some differences are as follows.

Bypass 40 is integrated with module 30 but is more along the side of mixing chamber 33 than built inside it. The inlet 44 to bypass 40 is at the same plane as the upper plate 34 of module 30. There could be a thin, flexible, short tube 45 attached to either the distal end of water tube 12 or inlet 44 to bypass 40 to provide a type of seal or guide for water into bypass 40. A similar flexible tube or curtain 45A could be at inlet 37 to mixing chamber 33. Outlet 46 of bypass 40 is, in this embodiment, less integrated but similarly presents a separate flow path for water 13 from tube 12 to a dispensing location.

Figure 6A illustrates a specific way which concentrate 52 can be pre-loaded or pre-packaged into module 30. Here powderized or ground beverage concentrate is held in the lower part of the main mixing chamber 33. A permeable cover 54 holds it in place. A similar permeable layer might be placed below concentrate 52 (not shown). If module 30 is moved to its second state relative to water tube 12, water 13 would enter chamber inlet 37, permeate or percolate through cover 54, move or percolate through concentrate 52, and create an admixture of water (diluent) and diluted concentrate 53 from outlet 39 (Figure 6B). Water through inlet 37 and outlet 39 are separate from and produce a different beverage than water through inlet 44 and outlet 46 of bypass 40.

Figure 6B shows module 30 in the second or mixing state, with module 30 moved so fixed water tube 12 is now over inlet 37 to mixing chamber 33. Water 13 into chamber 33 would move or percolate through the pre-emplaced concentrate 52 and out of outlet 39 as mixed beverage 53. Figure 6B illustrates an option. Two volumes of concentrate 52 and 52B could be prepackaged into module 30. They could be the same substance or different. They could be separated by membrane 54B.

### Specific Exemplary Embodiment Four (Figures 7A-B)

Another option would be more than one admixture choice for each module 30. Figures 7A-B show two inlet openings 37 and 37B to mixing chamber 33 where one would be in fluid communication with one portion of the mixing chamber 33 and the other a subset thereof. Thus, as one example, concentrate loaded into mixing chamber 33 could produce a more concentrated mixed beverage if diluent is entered through one inlet and filters through the entire volume of additive or concentrate in mixing chamber 33, versus selecting the other inlet where the diluent would flow only through a fraction of the total amount of additive or concentrate in mixing chamber 33 (to produce a weaker beverage). This gives the consumer a third beverage choice from a single module 30 (water 13 through bypass 40, admixture 53 through a first volume of concentrate 52, or admixture 53B through a second volume of admixture 52B. As can be appreciated, additional inlets and/or other ways to alter concentration of mixed beverage are possible.

As will be appreciated, another way to obtain an admixture of different concentration or dilution levels would be to control the metering of amount of concentrate that is injected by subsystem 60 (e.g., Figure 3C) in mixing chamber 33. A still further option would be to alter the amount or pressure or other factor of the diluent relative to its flow through or resident time in the concentrate.

Instead of module 30 being pre-loaded with two volumes of the same concentrate, alternatively concentrate 52 could be a first concentrate (e.g. coffee) and concentrate 52B could be a second concentrate (e.g. tea).

### Specific Exemplary Embodiment Five (Figures 8A-C)

Figures 8A-C show a different alternative module 30 that still uses the basic principle of a separate mixing chamber and separate bypass conduit. One difference is a top cover 32A could be snap-fit or connectable by other means or methods to cover the mixing chamber 33 to provide a more contained mixing chamber. This would be conducive to where water from tube 12 is at relative high pressure and encourages turbulent mixing of concentrate 52 in mixing chamber 33. The two-piece structure would allow module 30 to be removed and disassembled for cleaning, such as put the two disassembled pieces in a dishwasher.

Figures 8A-C show another possible alternative. Instead of one bypass 40 and two concentrate flow paths like Figures 7A and B, there might be two water bypass flow paths 40 and 40B and one concentrate flow path. This configuration might require sliding module 30 between three in-line inlets instead of rotation of module 30, but could be used in situations where two water bypasses are desired (producing dispensed water at 13A or 13B). It might be that a concentrate could be added to one of flow paths 40 or 40B by some type of metering or injection sub-system (like sub-system 60 of Figure 3C).

Figure 8C illustrates another possible alternative. Multiple layers of concentrate (or different concentrates) could be serially pre-loaded along the admixture flow (see concentrate portions 52B, 52C, and 52D in Figure 8C). Permeable layers 54C and 54D could separate the concentrate portions 52B, C, and D. The resulting beverage at outlet 39 of module when water is passed through that flow path would be an admixture of water 13 and dilutions of each portion 52B-D.

### Specific Exemplary Embodiment Six (Figures 9-12)

Module 30 could have different constructions. The foregoing embodiments show module 30 as more of a cartridge or vessel. Figures 9-12 show that module could take more of the form of a pod. It still includes a separate mixing chamber and bypass conduit. This example the module 30 is basically spherical. It could be made out of two elastomeric or almost film or thin wall pieces that are adhered or sonically welded together after pre-filling with a concentrate. This produces a substantially enclosed mixing chamber. This could be beneficial for turbulent mixing or improved containment. Outlet 39 could utilize a flexible material and capillary action to retain the concentrate but allow the dilution to exit once the concentrate is mixed with diluent. Bypass 40 could be a separate tube that is mounted to or through the pod body. It could be fixed in place by adhesive or sonic welding or other means or methods. It provides a separate inlet, flow path, and outlet from mixing chamber input 37, mixing chamber 33, and mixing chamber outlet 39. Bypass 40 receives water 13 from water tube 12, when aligned therewith, and dispenses that water 13 (Figure 9). Mixing chamber 33 receives water 13 from water tube 12, when aligned therewith, and dispenses a dilution 53 of water and concentrate (Figure 10). Figure 10 diagrammatically illustrates how water as a diluent would enter mixing chamber 33 and percolate through concentrate 52 to outlet 39. Concentrate 52 is not shown in Figure 9 to better illustrate how bypass 40 passes through mixing chamber 33.

Figures 11 and 12 show how such a pod module could optionally be partitioned into vertical layers by permeable dividers 54 and 54B which could allow for a variety of other functions, such as increased resident time of the diluent in the module for complete mixing or brewing. It also provides an opportunity for different concentrations or different concentrates in different sections. Figure 12 also shows how separate water inlets can be built into pod module 30, one for water bypass 40 to dispense water 13, one for diluent to pass through all vertical layers 52, 52B, and 52C of concentrate in pod 30 (to produce Mix 1), and one for diluent to pass through less than all vertical layers (just layers 52B and C) (to produce Mix 2). Pod would be moved linearly to select states (to align water tube 12 over bypass inlet 40 or mixing chamber inlet 37 (or 37B)). Pod could be made of an elastomer-like rubber or synthetic rubber with flexible walls. Bypass 40 could be made of similar or different material.

### Specific Exemplary Embodiment Seven (Figures 13A-B)

Figures 13A-B are similar to earlier embodiments. A major difference is multiple mixing chamber inlets 37, 37B, 37C are configured to be selectively rotated into alignment with water tube 12, in addition to bypass inlet 44. But each inlet 37, 37B, 37C has an outlet that enters mixing chamber 33 at a different vertical height. This can allow a user to select a different concentration level of dilution for concentrate that is filled into mixing chamber 33. For example, the user can choose water 13 by rotating module 30 so that bypass inlet 44 is aligned with water tube 12. A strongest concentration is selected by rotating module 30 to align water tube with inlet 37 (as water would enter and percolate through an entire vertical cross-section of concentrate in mixing chamber 33). A lower concentration of concentrate in the dispensed dilution is obtained by rotating module 30 to align water tube 12 with inlet 37B, because it enters mixing chamber 33 about 3/4ths its vertical height. A lowest concentration would result from rotation of module to align water tube 12 with inlet 37C, because water would tend to flow to near the bottom of chamber 33 and then percolate through the least amount of concentrate before leaving module 30.

### Specific Exemplary Embodiment Eight (Figures 14A-B)

Figures 14A-B illustrate diagrammatically a possible automated way to rotate module 30 between inlets. Top flange 34 could be formed to have a gear profile around its perimeter (see reference number 72). A driven gear 74 could be operatively connected to and rotated by drive gear 76 of electric motor 70, calibrated to rotate flange 34 between the inlets according to an instruction. Figure 14A illustrates rotation to a bypass or first state. Figure 14B is to a second state or admixture state.

The motor or actuator to rotate driven gear 74 could be built into dispenser 20. When module 30 is inserted, such an actuator, upon appropriate instruction, can translate it relative to water tube 12 between the at least two states.

As can be appreciated there would be a number of ways to utilize gearing to rotate module 30. An alternative would be to drive gear 72 directly from motor gear 76. An alternative would be a driven rubber wheel that would frictionally abut and rotate module. In either case, module 30 would be rotated around its center vertical axis between states. It could also be rotated between multiple states. As previously described, the receiver for the module could require that it only can be originally positioned in a home position so that the actuator would always know it starts from that position. Alternatively, there could be some sort of geometry or sensible feature on module 30 that could be sensed automatically to inform the appliance of position and inform the actuator where the module is relative to states at any time.

Alternatively, the actuator could simply move module 30 linearly relative to water tube 12 between states. One example would be a geometry on body 32 of module 30 that snaps into a home position at dispensing station 20 but can move back and forth on a track built into dispenser 20. The actuator and push and pull module between states.

### Specific Exemplary Embodiment Nine (Figures 15A-C)

Figures 15A-C diagrammatically illustrate one way to linearly move module 30 between states. Water tube 12 is fixed in position in appliance 10. A carriage 82 is mounted in dispensing station 20 in a manner that allows it to move laterally relative to water tube 12 (e.g., by swinging on parallel linkages 88 connected at spaced apart pivot connections 87 on carriage 82 and spaced-apart pivot connections 89 on plate 86 mounted on refrigerator 10, or by other means). Module 30 can be removably inserted into carriage 82 in a fixed position relative to carriage 82, with the inlets to bypass 40 and mixing chamber 33 exposed on the top side, and the outlet 39 on the bottom (through bottom opening 85 in carriage 82). Module 30's top lip 34 could fit laterally into a slot 83 in carriage 82, and body 32 in lower cavity 84. Bottom opening 85 can allow dispension from module 30.

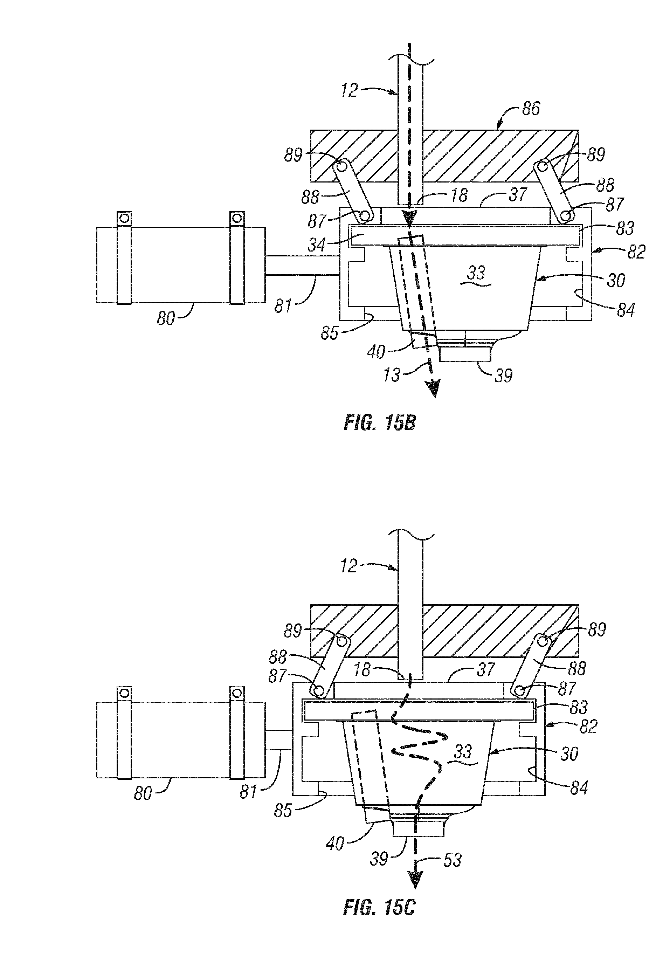

Actuator 80 is fixedly mounted to refrigerator 10 (e.g. by straps fastened to the refrigerator or otherwise) and operatively connected to carriage 82 and has an arm 81 that extends or retracts according to operation of actuator 80 (e.g. a linear actuator). Extension of arm 81 pushes carriages 82 to the right (Figures 15A and B) to align water tube 12 with bypass 40 for the first state. Retraction of arm 81 relative to actuator 80 pulls carriage 82 to the left (Figure 15C) to align water tube 12 with the inlet to mixing chamber 33 for the second state.

The specific configuration for such a combination can take many forms. Actuator 80 could be a linear actuator, solenoid, or other electrically operated component. Others are, of course, possible.

### Specific Exemplary Embodiment Ten (Figures 16A-D)

Figures 16A-F diagrammatically illustrate multiple states for a system such as was described relative to Figures 15A-C. These concepts could be applied to other embodiments also.

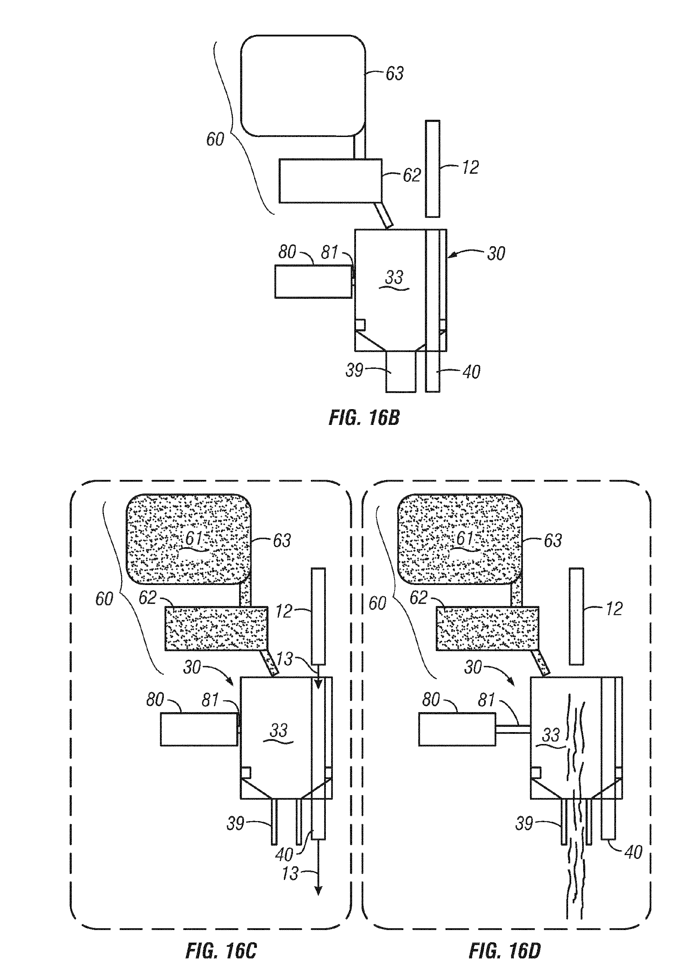

A module 30 can be inserted into appliance 10. A separate subsystem 60 could inject concentrate or other substance 61 (e.g., from reservoir 63 by pump 62) into the mixing chamber 33 of module 30 and then water would be added (contemporaneously or after) to produce a dilution of water and injected concentrate into glass 28 (Fig. 16D). In this embodiment, module would not be pre-loaded with concentrate. Actuator 80 would move module 30 so that opening 37 to mixing chamber 33 is below water tube 12 (Figs. 16A and 16D). For dispensing water only, actuator 80 would pull module 30 towards it to align bypass tube 40 with water tube 12 (Figs. 16B and 16C).

As can be appreciated, however, for possibly more beverage choices, module 30 could be pre-loaded with concentrate 52 before insertion into appliance 10. The consumer could elect a beverage of just water (Figure 16C). But alternatively, the consumer could elect a beverage of pre-loaded concentrate 52 diluted by water (Fig. 16E). Not only that, but a third beverage choice is available if another substance 61 is injected into chamber 33 by sub-system 60 (Figure 16E).

As can be thus appreciated, a number of added dispensing options are presented with this arrangement: a beverage with pre-loaded concentrate 52 from module 30 (Figure 16E), a beverage with both pre-loaded concentrate 52 in module 30 and an additive 62 injected by subsystem 60 (Figure 16E). Another option could be a beverage with an additive from a subsystem 60 as diluent of the pre-loaded concentrate in module 30, without use of diluent from water tube 12.

As can be further appreciated, once pre-loaded concentrate is used up in a module 30, water is still available through bypass 40, but module 30 could be left in place and beverages could be created with just water as diluent and injection of concentrate from sub-system 60 into chamber 33. Chamber 33 would be used as a mixing chamber.

Also, it can be possible that any of the concentrate 61 could be liquid. A bulk reservoir 63 could be metered under control by a meter or pump 62 of sub-system 60 that could be controlled by appliance 10. Or, concentrate 52 pre-loaded in module 30 could be liquid.

### Specific Exemplary Embodiment Eleven (Figures 17A-D)

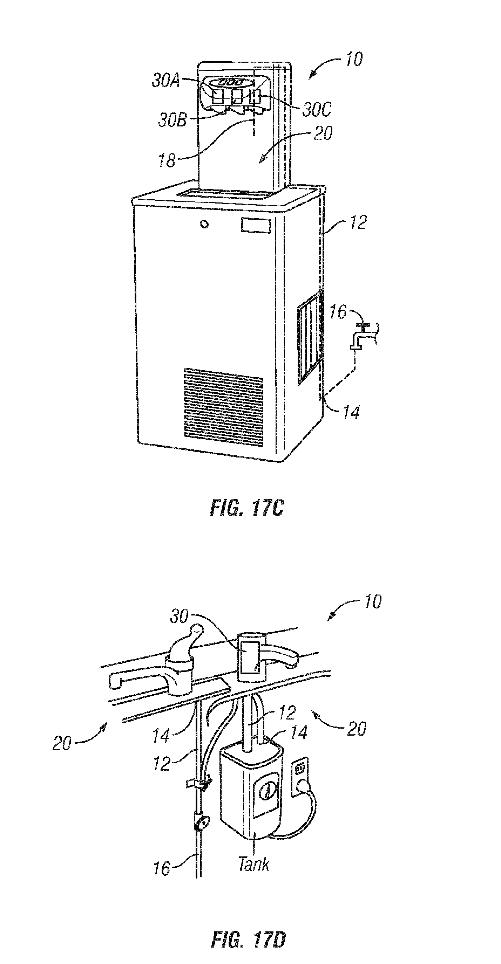

Figures 17A-D simply illustrate how module 30 or variations thereof could be utilized in a variety of different types of beverage dispensers or appliances. A few examples include table-top (Figure 17A) or floor-standing (Figure 17B) water cooler type dispensers using a bulk (e.g., twenty gallon inverted water source) as the water source through a water tube 12. An alternative would be more of a commercial convenience store or fast food store multiple beverage dispenser (Figure 17C) that would have a water source. A still further alternative could be a residential system built into or at the sink of the consumer (Figure 17D). The housing or source of water could be either a water tank (heated) or a cold water source 12 from the residence to a dispensing head that would include the ability to place the module 30 in that head.

### Alternatives and Options

As will be appreciated from the foregoing, variations from embodiment one are possible. Those skilled in the art will appreciate the same. Variations obvious to those skilled in the art will be included within the invention which is defined solely by its claims and not by the embodiments described herein.

The foregoing are but a few alternatives and options. Others, of course, are possible within the scope of the invention as defined in the following claims.

## Claims

1. A dispensing module for use with a beverage dispenser comprising:
a. a body having first and second spaced-apart inlet openings and first and second outlet openings;
b. a first fluid path from the first inlet opening, through at least a portion of a mixing chamber in the body, and out the first outlet opening;
c. a second fluid path, independent of the first fluid path, from the second inlet opening and out the second outlet opening.

2. The dispensing module of claim 1 wherein the mixing chamber is palm-sized.

3. The dispensing module of claim 2 wherein palm-sized comprises on the order of five inches in height, length, and width or less.

4. The dispensing module of any one of the preceding claims wherein the inlet openings are generally in the same plane.

5. The dispensing module of any one of the preceding claims wherein the outlet openings are generally in the same plane.

6. The dispensing module of any one of the preceding claims wherein the inlet openings are generally in a first plane and the outlet opening are generally in a second plane, the first and second planes generally on opposite sides of the body.

7. The dispensing module of any one of the preceding claims further comprising a third fluid path from a third fluid inlet opening, through at least a portion of the mixing chamber in the body, and out the first outlet opening.

8. The dispensing module of claim 7 further comprising a beverage additive or concentrate pre-filled into the mixing chamber, and the first and third fluid paths adapted to provide a different concentration of beverage to the first outlet depending on selection of the first or third fluid path when diluent is introduced.

9. The dispensing module of claim 7 or 8further comprising a beverage additive or concentrate source for adding beverage additive or concentrate into the mixing chamber, and the first and third fluid paths adapted to provide a different concentration of beverage to the first outlet depending on selection of the first or third fluid path when diluent is introduced.

10. The dispensing module of any one of the preceding claims in combination with a beverage dispenser.

11. The dispensing module of any one of the preceding claims further comprising a mechanism to selectively position the first and second inlets relative to a diluent source.

12. The dispensing module of claim 11 wherein the mechanism comprises a manually adjustable interface allowing manually translation of the module relative the diluent source.

13. The dispensing module of claim 12 wherein the manually adjustable interface comprises a receiver for the module having first and second states, the first state positioning the module so that the diluent source is in fluid communication with the bypass inlet, the second state the mixing chamber inlet.

14. The dispensing module of claim 11 wherein the mechanism comprises an actuator adapted to selectively position the first and second inlets relative to a diluent source.

15. The dispensing module of claim 14 further comprising a control circuit to operate the actuator, optionally wherein the control circuit issues an instruction to the actuator based on a user selection.
